(19) Europäisches Patentamt
European Patent Office
Office européen des brevets

(11) **EP 4 757 475 A1**

(12) **EUROPEAN PATENT APPLICATION**
published in accordance with Art. 153(4) EPC

(43) Date of publication:
**10.06.2026 Bulletin 2026/24**

(21) Application number: **24849449.4**

(22) Date of filing: **23.07.2024**

(51) International Patent Classification (IPC):
**H04W 72/25** (2023.01)       **H04W 72/0446** (2023.01)
**H04W 72/0453** (2023.01)       **H04W 74/0808** (2024.01)
**H04W 92/18** (2009.01)

(52) Cooperative Patent Classification (CPC):
**H04W 72/04; H04W 72/0446; H04W 72/0453;
H04W 72/25; H04W 74/08; H04W 74/0808;
H04W 92/18**

(86) International application number:
**PCT/KR2024/010631**

(87) International publication number:
**WO 2025/028880 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.08.2023   KR 20230100534**

(71) Applicant: **Hyundai Mobis Co., Ltd.
Gangnam-gu
Seoul 06141 (KR)**

(72) Inventor: **KIM, Tae Hyoung
Cheonan-si, Chungcheongnam-do 31168 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **METHOD, COMMUNICATION DEVICE AND STORAGE MEDIUM FOR TRANSMITTING WIRELESS CHANNEL, AND METHOD, COMMUNICATION DEVICE AND STORAGE MEDIUM FOR RECEIVING WIRELESS CHANNEL**

(57)    A communication device of the present specification transmits a first control information format including channel occupancy time (COT) sharing information, which includes time domain information and frequency domain information related a COT of a cell. The first control information format comprises: i) a source ID field and a destination ID field for a transport block; and ii) at least one additional destination ID field for the COT sharing information.

## FIG. 14

```
┌────────────────────────────────────────┐
│  Type 1 channel access is successful   │ ─── S1401
└────────────────────────────────────────┘
                    │
                    ▼
┌────────────────────────────────────────┐
│   Transmit control information format  │
│      including COT-SI, source ID and   │ ─── S1403
│    destination ID for TB, and additional│
│   destination ID for CST-SI within COT │
└────────────────────────────────────────┘
```

EP 4 757 475 A1

**Description**

**TECHNICAL FIELD**

The present disclosure relates to a wireless communication system.

**BACKGROUND**

A wireless communication system supports communication of user equipments (UEs) by utilizing available system resources (e.g., bandwidth, transmission power, etc.). With introduction of new wireless communication technologies, not only does the number of UEs to which a base station (BS) should provide services in a given resource region increase, but also the amount of data and control information transmitted and received between the BS and the UEs to which the BS provides the services increases. Since the amount of wireless resources available for communication between the BS and UE(s) is finite, a new scheme is required for the BS to efficiently receive and transmit uplink and/or downlink data and/or uplink and/or downlink control information from and to the UE(s) by using the finite wireless resources. In other words, as the density of nodes increases and/or the density of UEs increases, a scheme for efficiently utilizing high-density nodes or high-density UEs for communication has been required. For example, as a scheme for alleviating the burden of the BS caused by rapidly increasing data traffic, direct communication between two or more nearby UEs without passing through a network node by using wireless communication technology has been studied. As the necessity of vehicle-to-everything (V2X) emerges, which is a communication technology supporting wired and wireless communication between a vehicle and another vehicle, infrastructure, a network, or a pedestrian, a rapid increase in communication between devices is expected.

**DISCLOSURE**

**TECHNICAL PROBLEM**

Considering the amount and frequency of communication between devices that are expected to increase rapidly, a scheme for stably supporting communication between devices is required.

The technical objects to be achieved by the present disclosure are not limited to the above-described technical objects, and other technical objects may be clearly understood by a person of ordinary skill in the art from the following detailed description.

**TECHNICAL SOLUTION**

In an aspect of the present disclosure, provided herein is a method of transmitting a wireless channel by a communication device in a wireless communication system. The method includes: performing a Type 1 channel access on a cell for transmission of a transport block; and based on success of the Type 1 channel access for the cell, transmitting a first control information format and the transport block within a channel occupancy time (COT) determined by the Type 1 channel access, wherein the first control information format includes COT sharing information including time-domain information and frequency-domain information related to the COT for the cell. The first control information format includes: i) a source identifier (ID) field and a destination ID field for the transport block; and ii) at least one additional destination ID field for the COT sharing information.

In another aspect of the present disclosure, provided herein is a communication device configured to transmit a wireless channel in a wireless communication system. The communication device includes: at least one transceiver; at least one processor; and at least one memory operably connected to the at least one processor and storing instructions that, when executed, cause the at least one processor to perform operations. The operations include: performing a Type 1 channel access on a cell for transmission of a transport block; and based on success of the Type 1 channel access for the cell, transmitting a first control information format and the transport block within a COT determined by the Type 1 channel access, wherein the first control information format includes COT sharing information including time-domain information and frequency-domain information related to the COT for the cell. The first control information format includes: i) a source ID field and a destination ID field for the transport block; and ii) at least one additional destination ID field for the COT sharing information.

In another aspect of the present disclosure, provided herein is a computer-readable non-transitory storage medium including at least one computer program that causes at least one processor to perform operations. The operations include: performing a Type 1 channel access on a cell for transmission of a transport block; and based on success of the Type 1 channel access for the cell, transmitting a first control information format and the transport block within a COT determined by the Type 1 channel access, wherein the first control information format includes COT sharing information including time-domain information and frequency-domain information related to the COT for the cell. The first control information format includes: i) a source ID field and a destination ID field for the transport block; and ii) at least one additional destination ID field for the COT sharing information.

In another aspect of the present disclosure, provided herein is a method of receiving a wireless channel by a communication device in a wireless communication system. The method includes: receiving a first control information format including COT sharing information including time-domain information and frequency-domain information related to a COT for a cell, wherein the first control information format includes: i) a source ID field and a destination ID field for a transport block; and ii) at least one additional destination ID field for the COT sharing information; based on a value of the additional destination ID field matching any one of source Layer-2 IDs of the communication device, performing a Type 2 channel access within the COT indicated by the COT sharing information; and based on success of the Type 2 channel access, performing wireless transmission on at least one available resource within the COT.

In another aspect of the present disclosure, provided herein is a communication device configured to receive a wireless channel in a wireless communication system. The communication device includes: at least one transceiver; at least one processor; and at least one memory operably connected to the at least one processor and storing instructions that, when executed, cause the at least one processor to perform operations. The operations include: receiving a first control information format including COT sharing information including time-domain information and frequency-domain information related to a COT for a cell, wherein the first control information format includes: i) a source ID field and a destination ID field for a transport block; and ii) at least one additional destination ID field for the COT sharing information; based on a value of the additional destination ID field matching any one of source Layer-2 IDs of the communication device, performing a Type 2 channel access within the COT indicated by the COT sharing information; and based on success of the Type 2 channel access, performing wireless transmission on at least one available resource within the COT.

In another aspect of the present disclosure, provided herein is a computer-readable non-transitory storage medium including at least one computer program that causes at least one processor to perform operations. The operations include: receiving a first control information format including COT sharing information including time-domain information and frequency-domain information related to a COT for a cell, wherein the first control information format includes: i) a source ID field and a destination ID field for a transport block; and ii) at least one additional destination ID field for the COT sharing information; based on a value of the additional destination ID field matching any one of source Layer-2 IDs of the communication device, performing a Type 2 channel access within the COT indicated by the COT sharing information; and based on success of the Type 2 channel access, performing wireless transmission on at least one available resource within the COT.

In each aspect of the present disclosure, the source ID field includes 8 least significant bits (LSBs) of a source Layer-2 ID of the transport block, the destination ID field includes 16 LSBs of a destination Layer-2 ID of the transport block, and the additional destination ID field includes 16 LSBs of a destination Layer-2 ID different from the destination Layer-2 ID.

In each aspect of the present disclosure, the transport block and the first control information format may be transmitted or received through a physical shared channel.

In each aspect of the present disclosure, the methods or operations may include: transmitting or receiving a physical control channel carrying a second control information format for scheduling the physical shared channel and the first control information format within the COT.

The above-described solutions are merely some examples of the present disclosure, and various examples reflecting technical features of the present disclosure may be derived and understood by a person having ordinary skill in the art based on the following detailed description.

## ADVANTAGEOUS EFFECTS

According to some implementation(s) of the present disclosure, wireless communication signals may be efficiently transmitted and received. Accordingly, overall throughput of a wireless communication system may be increased.

According to some implementations of the present disclosure, direct communication technologies between devices in a licensed spectrum, in which a license is granted to a specific network operator and which may be used exclusively or preferentially by the network operator, may also be utilized in a shared spectrum.

According to some implementations of the present disclosure, direct communication between devices may be efficiently performed in a shared spectrum, which is an unlicensed spectrum in which a license is not granted to a specific network operator and which may be freely used by multiple network operators.

Effects according to the present disclosure are not limited to the effects described above, and other effects not described may be clearly understood by a person having ordinary skill in the technical field related to the present disclosure from the following detailed description.

## BRIEF DESCRIPTION OF THE DRAWINGS

FIG. 1 is a block diagram illustrating examples of communication devices capable of performing a method according to the present disclosure;

FIG. 2 illustrates an example of a frame structure available in a 3rd Generation Partnership Project (3GPP)-based wireless communication system;

FIG. 3 illustrates an exemplary resource grid of a slot;

FIG. 4 illustrates communication links in a wireless communication system;

FIG. 5 is a diagram for explaining frequency resources and time resources for communication between devices;

FIGS. 6 and 7 illustrate transmission structures of physical channels for communication between devices within a slot;

FIG. 8 is a diagram for explaining a channel access mechanism on a shared spectrum according to some implementations;

FIG. 9 illustrates a flow of a channel access procedure;

FIG. 10 illustrates channel occupancy time (COT) sharing between a base station (BS) and a user equipment (UE);

FIG. 11 illustrates COT sharing between UEs according to some implementations of the present disclosure;

FIG. 12 illustrates a relationship between identifiers of a transmitting UE and identifiers of a receiving UE;

FIG. 13 illustrates utilization of an additional identifier (ID) according to some implementations of the present disclosure;

FIG. 14 illustrates an exemplary procedure in which a communication device performs wireless transmission according to some implementations of the present disclosure; and

FIG. 15 illustrates an exemplary procedure in which a communication device performs wireless reception according to some implementations of the present disclosure.

## DETAILED DESCRIPTION

Hereinafter, implementations according to the present disclosure are described in detail with reference to the accompanying drawings. The following detailed description together with the accompanying drawings is intended to describe exemplary implementations of the present disclosure, and is not intended to represent the only implementations through which the present disclosure may be practiced. The following detailed description includes specific details in order to provide a complete understanding of the present disclosure. However, a person of ordinary skill in the art understands that the present disclosure may be practiced without such specific details.

In some cases, to avoid obscuring concepts of the present disclosure, well-known structures and devices may be omitted or illustrated in a block diagram form focused on core functions of each structure and device. In addition, throughout the entire specification, the same reference numerals are used to describe the same components.

Techniques, devices, and systems described below may be applied to various wireless multiple access systems.

For convenience of description, the present disclosure is described below based on a 3rd Generation Partnership Project (3GPP)-based communication system. However, technical features of the present disclosure are not limited thereto. For example, even if the following detailed description is provided based on 3GPP Long Term Evolution (LTE) or 5G technology, some implementations of the present disclosure may be applied to other arbitrary mobile communication systems and systems to be introduced in the future (e.g., 6G), except for matters specific to 3GPP LTE or 5G.

For terms and techniques used in the present disclosure that are not specifically described, reference may be made to 3GPP-based standard documents, for example, 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP TS 36.322, 3GPP TS 36.323, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, and 3GPP TS 38.331.

In examples of the present disclosure described below, an expression that a device "assumes" may mean that an entity transmitting a channel transmits the channel in conformity with the corresponding "assumption." An entity receiving the channel may mean that the entity receives or decodes the channel in a form conforming to the corresponding "assumption," on the premise that the channel has been transmitted in conformity with the corresponding "assumption."

In the present disclosure, a user equipment (UE) may be fixed or have mobility, and includes various devices that transmit and/or receive user data and/or various types of control information by communicating with a base station (BS). The UE may be referred to as a terminal equipment, a mobile station (MS), a mobile terminal (MT), a user terminal (UT), or other terms. In addition, in the present disclosure, the BS generally refers to a fixed station that communicates with the UE and/or another BS, and exchanges various data and control information by communicating with the UE and other BSs. The BS may be referred to by other terms such as an advanced base station (ABS), a Node-B (NB), an evolved NodeB (eNB), a gNB, a base transceiver system (BTS), an access point (AP), or a processing server (PS). Hereinafter, for convenience of description, a base station is collectively referred to as the BS regardless of type or version of a communication technology.

In the present disclosure, a node refers to a fixed point capable of transmitting and receiving wireless signals by communicating with a UE. Various types of BSs, regardless of designation, may be used as the node. At least one antenna is installed at the node. The antenna may refer to a physical antenna, and the antenna may also refer to an antenna port, a virtual antenna, or an antenna group. The node is also referred to as a point.

A 3GPP-based communication system uses the concept of a cell in order to manage wireless resources, and a cell associated with wireless resources is distinguished from a cell of a geographical area. A "cell" of a geographical area may be understood as coverage in which a node is capable of providing a service by using a carrier, and a "cell" of wireless resources is associated with bandwidth (BW), which is a frequency range configured by the carrier. Since downlink coverage, which is a range in which a node is capable of transmitting a valid signal, and uplink coverage, which is a range in which a node is capable of receiving a valid signal from a UE, depend on a carrier that carries the corresponding signal, the coverage of a node is also associated with the coverage of a "cell" of wireless resources used by the node. Accordingly, the term "cell" may be used to refer to coverage of a service by a node in some cases, refer to wireless resources in some cases, or refer to a range in which a signal using the wireless resources is capable of reaching with a valid strength in some cases.

A "cell" associated with wireless resources may be defined as a combination of downlink resources (DL resources) and uplink resources (UL resources), that is, a combination of a DL component carrier (CC) and a UL CC. The cell may be configured with only DL resources, or with a combination of DL resources and UL resources. When carrier aggregation is supported, a linkage between a carrier frequency of DL resources (or a DL CC) and a carrier frequency of UL resources (or a UL CC) may be indicated by system information. Here, the carrier frequency may be the same as or different from a center frequency of each cell or CC.

In a wireless communication system, a UE receives information from a BS through downlink (DL), and the UE transmits information to the BS through uplink (UL). Information transmitted and/or received by the BS and the UE includes data and various types of control information, and various physical channels exist according to a type and a purpose of the information transmitted and/or received.

A 3GPP-based communication standard defines DL physical channels corresponding to resource elements that carry information originating from higher layers, and DL physical signals corresponding to resource elements that are used by a physical layer but do not carry information originating from higher layers. For example, a physical downlink shared channel (PDSCH), a physical broadcast channel (PBCH), and a physical downlink control channel (PDCCH) are defined as DL physical channels, and a reference signal and a synchronization signal are defined as DL physical signals. A reference signal (RS), also referred to as a pilot, refers to a signal having a predefined special waveform that is mutually known by the BS and the UE. For example, a demodulation reference signal (DMRS) and a channel state information reference signal (CSI-RS) are defined as DL reference signals. A 3GPP-based communication standard defines UL physical channels corresponding to resource elements that carry information originating from higher layers, and UL physical signals corresponding to resource elements that are used by a physical layer but do not carry information originating from higher layers. For example, a physical uplink shared channel (PUSCH), a physical uplink control channel (PUCCH), and a physical random access channel (PRACH) are defined as UL physical channels, and a DMRS for UL control and data signals and a sounding reference signal (SRS) used for UL channel measurement are defined.

In the present disclosure, a PDCCH refers to a set of time-frequency resources (e.g., resource elements (REs)) that carry DCI, and a PDSCH refers to a set of time-frequency resources that carry DL data. In addition, a PUCCH, a PUSCH, and a PRACH respectively refer to sets of time-frequency resources that carry UCI, UL data, and a random access preamble. Hereinafter, an expression that the UE or the BS transmits or receives a PUCCH, a PUSCH, or a PRACH is used to have the same meaning as transmitting or receiving UCI, UL data, or a random access preamble on or through the PUCCH, the PUSCH, or the PRACH, respectively. In addition, an expression that the BS or the UE transmits or receives a PBCH, a PDCCH, or a PDSCH is used to have the same meaning as transmitting or receiving broadcast information, DCI, or DL data on or through the PBCH, the PDCCH, or the PDSCH, respectively.

In the present disclosure, wireless resources (e.g., time-frequency resources) scheduled or configured for the UE by the BS for transmission or reception of the PUCCH, the PUSCH, or the PDSCH are also referred to as PUCCH resources, PUSCH resources, or PDSCH resources.

Since a communication device receives physical channels and/or physical signals in a form of wireless signals on a cell, the communication device is not capable of selectively receiving only wireless signals including only a specific physical channel or a specific physical signal through a radio frequency (RF) receiver, nor selectively receiving only wireless signals excluding a specific physical channel or a specific physical signal through the RF receiver. In an actual operation, the communication device receives wireless signals on the cell through the RF receiver, converts the wireless signals, which are RF-band signals, into baseband signals, and decodes physical signals and/or physical channels within the baseband signals by using one or more processors. Accordingly, in some implementations of the present disclosure, receiving no physical signal and/or physical channel does not mean that the communication device does not receive wireless signals including the corresponding physical signal and/or physical channel at all, but may mean that the communication device does not attempt to restore the physical signal and/or the physical channel from the wireless signals, for example, does not attempt decoding of the physical signal and/or the physical channel.

A communication system applied to the present disclosure includes a wireless device, a BS, and a network. Here, the wireless device may refer to a device that performs communication by using a wireless access technology (e.g., 5G New RAT (NR), LTE (e.g., E-UTRA), WiFi, or 6G to be introduced in the future).

Without being limited thereto, the wireless device may include a robot, a vehicle, an extended reality (XR) device, a hand-held device, home appliances, an Internet of Things (IoT) device, and an artificial intelligence (AI) device or server. For example, the vehicle may include a ground vehicle equipped with a wireless communication function, an autonomous driving vehicle, and a vehicle capable of performing communication between vehicles. Here, the vehicle may include an unmanned aerial vehicle (UAV) (e.g., drone) and an urban air mobility (UAM) vehicle (e.g., unmanned aerial transportation). The XR device may include an augmented reality (AR) device, a virtual reality (VR) device, and a mixed reality (MR) device. The hand-held device may include a smartphone, a smart pad, a wearable device (e.g., smartwatch or smart glasses), and a computer (e.g., laptop computer). Home appliances may include a television, a refrigerator, and a washing machine. The IoT device may include a sensor and a smart meter. For example, the BS and the network may be implemented as the wireless device, and a specific wireless device may operate as the BS or a network node for another wireless device.

A wireless device may be connected to the network through the BS. AI technology may be applied to the wireless device, and the wireless device may be connected to an AI server through the network. Wireless devices may communicate with each other through the BS or the network, but may also perform direct communication (e.g., SL communication) without passing through the BS or the network. For example, a vehicle may perform direct communication (e.g., vehicle-to-vehicle (V2V) or vehicle-to-everything (V2X) communication). In addition, an IoT device (e.g., sensor) may perform direct communication with another IoT device (e.g., sensor) or another wireless device.

Wireless communication or connection may be established between wireless devices, between BSs, or between a wireless device and a BS. Here, the wireless communication or connection may include uplink/downlink (UL/DL) communication and SL communication (or device-to-device (D2D) communication), and may be performed through various wireless access technologies (e.g., 5G NR). Through the wireless communication or connection (UL/DL, SL), the wireless device and the BS or another wireless device may transmit and receive wireless signals to and from each other. For this purpose, based on various proposals of the present disclosure, at least some of configuration information setting procedures for transmission and reception of wireless signals, signal processing procedures (e.g., channel encoding or decoding, modulation or demodulation, resource mapping or demapping, etc.), and resource allocation procedures may be performed.

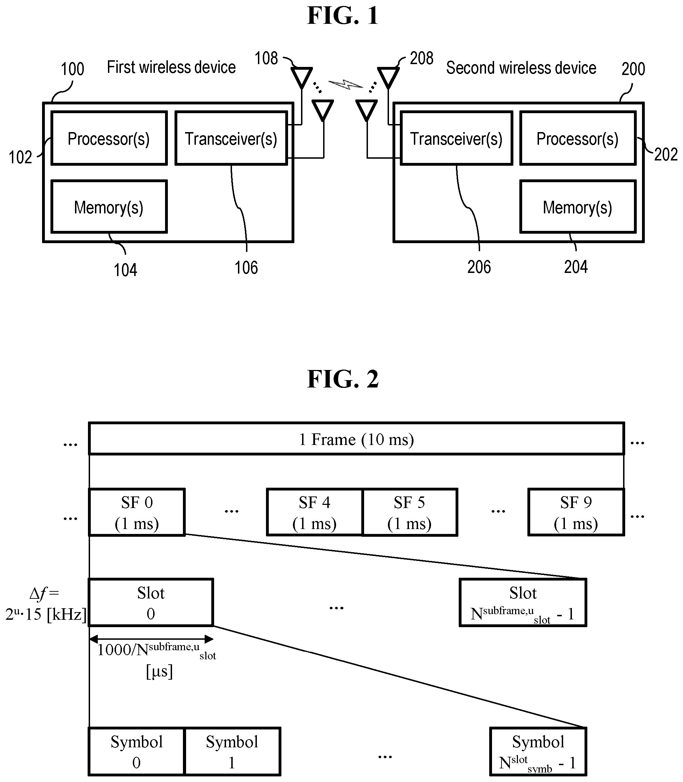

FIG. 1 is a block diagram illustrating examples of communication devices capable of performing a method according to the present disclosure. Referring to FIG. 1, a first wireless device 100 and a second wireless device 200 may transmit and/or receive wireless signals through various wireless access technologies. Here, {first wireless device 100, second wireless device 200} may correspond to {wireless device, BS} and/or {wireless device, wireless device} described above.

Each of the first wireless device 100 and the second wireless device 200 includes one or more processors 102 and 202 and one or more memories 104 and 204, and may further include one or more transceivers 106 and 206 and/or one or more antennas 108. The processors 102 and 202 control the memories 104 and 204 and/or the transceivers 106 and 206, and may be configured to implement functions, procedures, and/or methods described or proposed below. For example, the processors 102 and 202 may process information in the memories 104 and 204 to generate first information or a first signal, and transmit a wireless signal including the first information or the first signal through the transceivers 106 and 206. In addition, the processors 102 and 202 may receive a wireless signal including second information or a second signal through the transceivers 106 and 206, and store information obtained from signal processing of the second information or the second signal in the memories 104 and 204. The memories 104 and 204 may be connected to the processors 102 and 202 and store various information related to operation of the processors 102 and 202. For example, the memories 104 and 204 may store software code including instructions for performing some or all of processes controlled by the processors 102 and 202, or for performing procedures and/or methods described or proposed below. Here, the processors 102 and 202 and the memories 104 and 204 may be part of a communication modem, a circuit, or a chip designed to implement a wireless communication technology. The transceivers 106 and 206 may be connected to the processors 102 and 202 and transmit and/or receive wireless signals through one or more antennas 108 and 208. The transceivers 106 and 206 may include a transmitter and/or a receiver.

Without being limited thereto, one or more protocol layers may be implemented by the processors 102 and 202. For example, the processors 102 and 202 may implement one or more layers (e.g., functional layers such as a physical (PHY) layer, a medium access control (MAC) layer, a radio link control (RLC) layer, a packet data convergence protocol (PDCP) layer, a radio resource control (RRC) layer, and a service data adaptation protocol (SDAP) layer). The processors 102 and 202 may generate one or more protocol data units (PDU) and/or one or more service data units (SDU) according to functions, procedures, proposals, and/or methods provided in the present disclosure. The processors 102 and 202 may generate a message, control information, data, or information according to the functions, procedures, proposals, and/or methods provided in the present disclosure. The processors 102 and 202 may generate a signal (e.g., baseband signal) including a PDU, an SDU, a message, control information, data, or information according to the functions, procedures, proposals, and/or methods provided in the present disclosure, and provide the signal to the transceivers 106 and 206. The processors 102 and 202 may receive a signal (e.g., baseband signal) from the transceivers 106 and 206, and obtain a PDU, an SDU, a message, control information, data, or information according to the functions, procedures, proposals, and/or methods provided in the present disclosure.

The processors 102 and 202 may be referred to as a controller, a microcontroller, a microprocessor, or a microcomputer. The processors 102 and 202 may be implemented by hardware, firmware, software, or a combination thereof, and the firmware or the software may be implemented to include modules, procedures, functions, and the like. The firmware or the software configured to perform the functions, procedures, proposals, and/or methods provided in the present disclosure may be included in the processors 102 and 202, or may be stored in the memories 104 and 204 and executed by the processors 102 and 202. The functions, procedures, proposals, and/or methods provided in the present disclosure may be implemented by using the firmware or the software in a form of code, instructions, and/or a set of instructions.

The memories 104 and 204 may be connected to the processors 102 and 202 and store various types of data, signals, messages, information, programs, code, indications, and/or instructions. The memories 104 and 204 may be located inside and/or outside the processors 102 and 202. In addition, the memories 104 and 204 may be connected to the processors 102 and 202 through various technologies such as a wired connection or a wireless connection.

The transceivers 106 and 206 may transmit and/or receive user data, control information, or wireless signals/channels mentioned in methods and/or operation flowcharts of the present disclosure to or from one or more other devices. The processors 102 and 202 may control the transceivers 106 and 206 to transmit and/or receive user data, control information, or wireless signals to or from one or more other devices. In addition, the transceivers 106 and 206 may be connected to the antennas 108 and 208, and the transceivers 106 and 206 may be configured to transmit and/or receive user data, control information, or wireless signals/channels mentioned in the functions, procedures, proposals, methods, and/or operation flowcharts provided in the present disclosure through the antennas 108 and 208. In the present disclosure, one or more antennas may be a plurality of physical antennas or a plurality of logical antennas (e.g., antenna ports). The transceivers 106 and 206 may convert received user data, control information, or wireless signals/channels from RF-band signals into baseband signals in order to process the received wireless signals/channels by using the processors 102 and 202. The transceivers 106 and 206 may convert user data, control information, or wireless signals/channels processed by using the processors 102 and 202 from baseband signals into RF-band signals. For this purpose, the transceivers 106 and 206 may include an (analog) oscillator and/or a filter.

In the present disclosure, the memories 104 and 204 may store instructions or programs, and the instructions or the programs, when executed, may cause the processors 102 and 202 operably connected to the memories 104 and 204 to perform operations according to some embodiments or implementations of the present disclosure.

In the present disclosure, a computer-readable (non-transitory) storage medium may store at least one instruction or computer program, and the at least one instruction or computer program, when executed by at least one processor, may cause the at least one processor to perform operations according to some embodiments or implementations of the present disclosure.

FIG. 2 illustrates an example of a frame structure available in a 3GPP-based wireless communication system.

The frame structure of FIG. 2 is merely an example, and the number of subframes, the number of slots, and the number of symbols in a frame may be variously changed. In some wireless communication systems, different orthogonal frequency division multiplexing (OFDM) numerologies (e.g., subcarrier spacings (SCSs)) may be configured among a plurality of cells aggregated for the UE. Accordingly, the (absolute-time) duration of a time resource (e.g., subframe, slot, or transmission time interval (TTI)) composed of the same number of symbols may be differently configured among the aggregated cells. Here, a symbol may include an OFDM symbol (or a cyclic prefix orthogonal frequency division multiplexing (CP-OFDM) symbol) and a single-carrier frequency division multiple access (SC-FDMA) symbol (or a discrete Fourier transform-spread-OFDM (DFT-s-OFDM) symbol). In the present disclosure, a symbol, an OFDM-based symbol, an OFDM symbol, a CP-OFDM symbol, and a DFT-s-OFDM symbol may be used interchangeably.

Referring to FIG. 2, UL and DL transmissions are organized into frames. Each frame has a duration of $T_f = (\triangle f_{max}*N_f/100)*T_c = 10$ ms, where $T_c$, which is a basic time unit, is $T_c = 1/(\triangle f_{max}*N_f)$, $\triangle f_{max} = 480*10^3$ Hz, and $N_f = 4096$. For reference, a sampling time $T_s$ is $T_s = 1/(\triangle f_{ref}*N_{f,ref})$, where $\triangle f_{ref} = 15*10^3$ Hz and $N_{f,ref} = 2048$. $T_c$ and $T_s$ have a relationship of a constant $\kappa = T_s/T_c = 64$. A frame consists of 10 subframes, and a duration $T_{sf}$ of a single subframe is 1 ms. The subframes are further divided into slots, and the number of slots within a subframe depends on SCS. Each slot may consist of $N^{slot}_{symb}$ symbols based on a cyclic prefix (CP). For example, in some scenarios, for a normal CP, each slot consists of 14 OFDM symbols, and for an extended CP, each slot consists of 12 OFDM symbols. The numerology depends on an exponentially scalable SCS $\triangle f = 2^u*15$ kHz. The following table shows the number of OFDM symbols per slot ($N^{slot}_{symb}$), the number of slots per frame ($N^{frame,u}_{slot}$), and the number of slots per subframe ($N^{subframe,u}_{slot}$) according to

the SCS $\triangle f = 2^u * 15$ kHz for a normal CP.

[Table 1]

| u | $N^{slot}_{symb}$ | $N^{frme,u}_{slot}$ | $N^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The following table shows the number of OFDM symbols per slot, the number of slots per frame, and the number of slots per subframe according to the SCS $\triangle f = 2^u * 15$ kHz for an extended CP.

[Table 2]

| u | $N^{slot}_{symb}$ | $N^{frame,u}_{slot}$ | $N^{subframe,u}_{slot}$ |
|---|---|---|---|
| 2 | 12 | 40 | 4 |

For an SCS configuration u, slots are numbered in an increasing order within a subframe as $n^u_s \in \{0, ..., n^{subframe,u}_{slot} - 1\}$, and are numbered in an increasing order within a frame as $n^u_{s,f} \in \{0, ..., n^{frame,u}_{slot} - 1\}$.

Hereinafter, implementations of the present disclosure are described by referring to a slot as a minimum time unit for scheduling UL, DL, and SL transmissions. However, depending on wireless communication systems, a minimum time unit for scheduling may be referred to by a different term. For example, in an LTE-based system, a minimum time unit for scheduling transmissions is referred to as a subframe or a TTI, whereas in an NR-based system, a minimum time unit for scheduling is referred to as a slot.

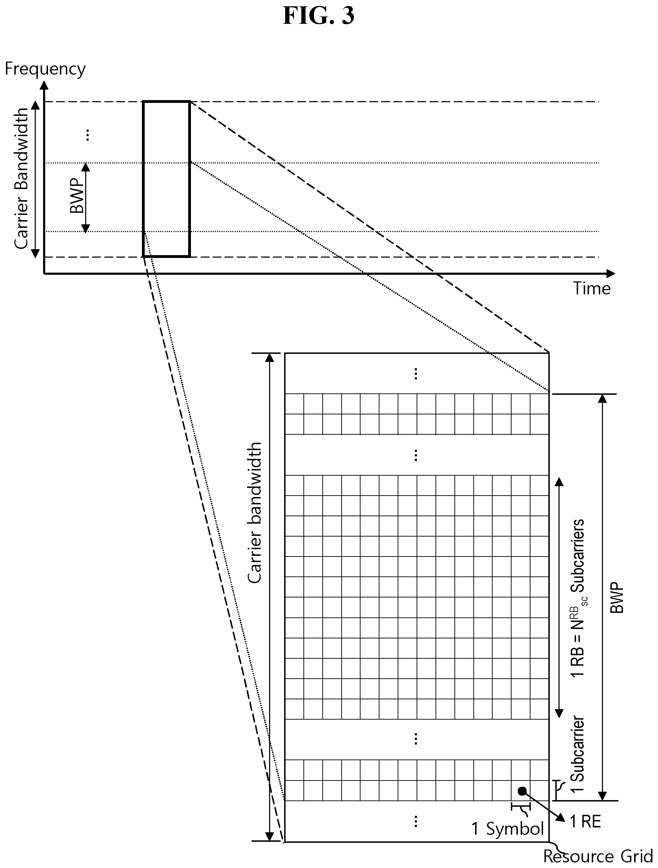

FIG. 3 illustrates an exemplary resource grid of a slot. A slot includes a plurality of symbols (e.g., $N^{slot}_{symb}$) in the time domain. For each numerology (e.g., SCS) and carrier, a resource grid including $N^{size,u}_{grid,x} * N^{RB}_{sc}$ subcarriers and $N^{subframe,u}_{symb}$ OFDM symbols is defined, starting from a common resource block (CRB) with an index of $N^{start,u}_{grid}$ as indicated by higher-layer signaling (e.g., radio resource control (RRC) signaling). Here, $N^{size,u}_{grid,x}$ is the number of resource blocks (RBs) in a resource grid, and a subscript x is DL for DL and UL for UL. $N^{RB}_{sc}$ is the number of subcarriers per RB, and in a 3GPP-based wireless communication system, $N^{RB}_{sc}$ is typically 12. For a given antenna port p, an SCS configuration u, and a transmission direction (DL or UL), one resource grid exists. A carrier bandwidth $N^{size,u}_{grid}$ for the SCS configuration u is provided to the UE by higher-layer parameters from the network (e.g., RRC parameters). For the antenna port p and the SCS configuration u, each element in a resource grid is referred to as an RE, and one complex-valued symbol may be mapped to each RE. Each RE in the resource grid is uniquely identified by an index k in the frequency domain and an index I indicating a symbol position relative to a reference point in the time domain. RBs may be classified into common resource blocks (CRBs) and physical resource blocks (PRBs). The CRBs are numbered upwards from 0 in the frequency domain for the SCS configuration u. For the SCS configuration u, a center of subcarrier 0 of CRB 0 coincides with Point A, which is a common reference point for RB grids. For the SCS configuration u, the PRBs are defined within a bandwidth part (BWP) and are numbered from 0 to $N^{size,u}_{BWP,i}-1$, where i denotes a number of the BWP. A relationship between a CRB $n^u_{CRB}$ and a PRB $n_{PRB}$ within a BWP i is as follows: $n^u_{PRB} = n^u_{CRB} + N^{start,u}_{BWP,i}$, where $N^{start,u}_{BWP,i}$ is a CRB at which the BWP starts relative to CRB 0. A BWP includes a plurality of contiguous RBs in the frequency domain. For example, a BWP is a subset of contiguous CRBs defined for a given numerology $u_i$ within BWP i on a given carrier. A carrier may include up to N BWPs (e.g., five BWPs). The UE may be configured to have one or more BWPs on a given CC. Data communication is performed through an activated BWP, and only a predetermined number (e.g., one) of BWPs among BWPs configured for the UE may be activated on the carrier.

For each BWP, the UE may be provided with at least one of the following parameters for a serving cell: i) an SCS; ii) a cyclic prefix; iii) CRB $N^{start}_{BWP} = O_{carrier} + RB_{start}$ and the number of contiguous RBs $N^{size}_{BWP} = L_{RB}$, which are provided by an RRC parameter *locationAndBandwidth* indicating an offset $RB_{set}$ and a length $L_{RB}$ as a resource indicator value (RIV), based on an assumption that $N^{start}_{BWP} = 275$. In addition, the parameters also include $O_{carrier}$, which is provided by an RRC parameter *offsetToCarrier* for SCS; an index within a set of DL BWPs or a set of UL BWPs; and a set of BWP-common parameters and a set of BWP-dedicated parameters.

Virtual resource blocks (VRBs) are defined within a BWP and are numbered from 0 to $N^{size,u}_{BWP,i}-1$, where i denotes a number of the BWP. The UE may assume that VRBs are mapped to PRBs according to a mapping scheme indicated to the UE (e.g., non-interleaved mapping or interleaved mapping). If no mapping scheme is indicated, the UE assumes non-interleaved mapping. In the case of non-interleaved VRB-to-PRB mapping, VRB n may be mapped to PRB n. In the case of interleaved VRB-to-PRB mapping, VRBs may be distributed and mapped to PRBs according to predefined rules.

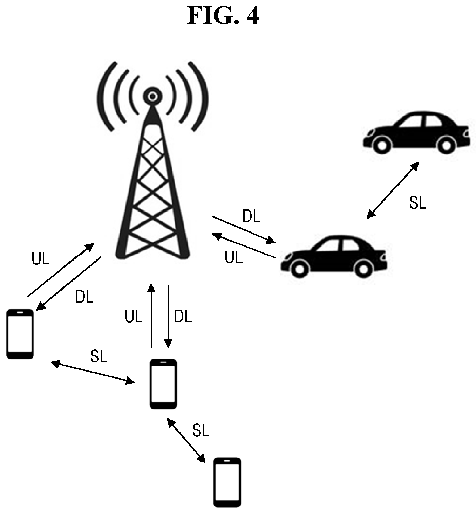

FIG. 4 illustrates communication links in a wireless communication system.

Referring to FIG. 4, in a wireless communication system, the UE receives information from the BS through DL, and the UE transmits information to the BS through UL. As a scheme capable of alleviating the burden of the BS caused by rapidly increasing data traffic, a technology that supports direct communication between two or more nearby UEs without passing through a network node by using wireless communication technology (e.g., SL communication) has been studied. For UEs located within or outside coverage of the BS, one UE may transmit data to another UE without passing through the network through SL that supports UE-to-UE direct communication by using SL resource allocation modes, physical-layer signals or channels, and physical-layer procedures. Hereinafter, implementations of the present disclosure are described by referring to direct communication between devices as SL communication.

SL transmissions use an OFDM waveform with a CP. The frame structure described in FIG. 2 and the resource grid structure described in FIG. 3 may be applied to SL. In some scenarios, for example, in NR V2X, only specific slots may be (pre-)configured to accommodate SL transmissions, and available SL resources may be composed of (common) RBs within SL time resources and an SL BWP (frequency resources). A subset of the available SL resources may be (pre-)configured to be used by some UEs for SL transmissions. Such a subset of the available SL resources is referred to as a resource pool.

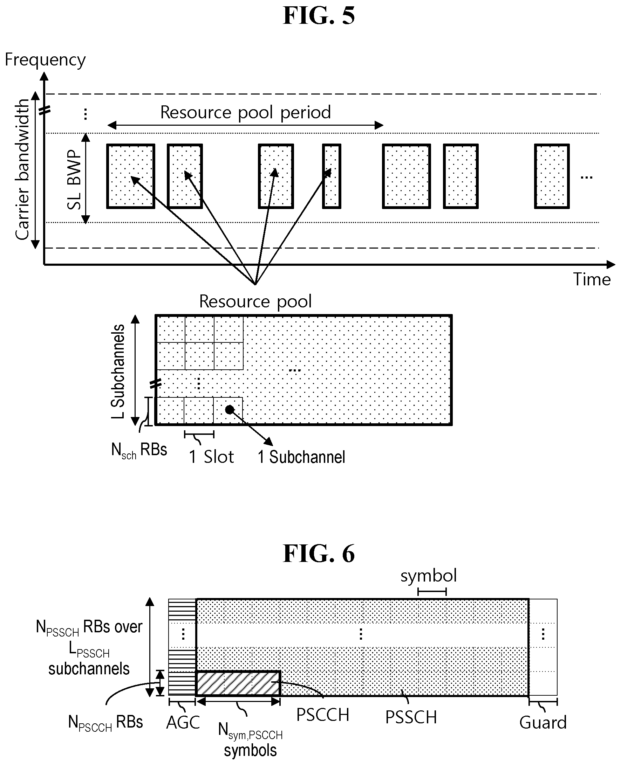

FIG. 5 is a diagram for explaining frequency resources and time resources for direct communication between devices.

Referring to FIG. 5, a resource pool is composed of i) contiguous PRBs and ii) contiguous or non-contiguous slots (pre-configured) for direct communication between devices. The concept of a BWP may be applied to SL as well. For direct communication between devices, the UE may be configured with a BWP having a numerology and a resource grid. Hereinafter, a BWP configured for direct communication between devices is referred to as an SL BWP. The SL BWP may occupy a contiguous portion of bandwidth within a carrier. Direct transmissions between devices and direct receptions between devices may be performed within the SL BWP. Hereinafter, direct transmission between devices is referred to as SL transmission, and direct reception between devices is referred to as SL reception. The resource pool may be defined within the SL BWP, and a single numerology is used within the resource pool. The resource pool may be shared by some UEs for direct communication between devices, and may be used for all transmission types (e.g., unicast, groupcast, and broadcast). The UE may be configured with one or more SL resource pools through higher-layer signaling (e.g., RRC signaling). The UE may perform transmission on SL by using transmission resource pool(s), and receive data on resource pools used for SL transmissions by other UE(s).

In the frequency domain, a resource pool is divided into a (pre-)configured number L of contiguous subchannels, and a subchannel is composed of a group of consecutive RBs within a slot. The number $N_{sch}$ of RBs within the subchannel corresponds to a subchannel size and is (pre-)configured for the resource pool. L and $N_{sch}$ may be provided to the UE through higher-layer signaling (e.g., RRC signaling). A first RB of a first subchannel within the SL BWP is (pre-)configured through RRC signaling. For example, the lowest RB index of a subchannel having the lowest index within the resource pool may be provided to UE(s), based on the lowest RB index of the SL BWP. In NR V2X, the subchannel size $N_{sch}$ may be equal to 10, 12, 15, 20, 25, 50, 70, or 100 RBs. In SL, a subchannel represents the smallest unit for SL data transmission or reception. SL transmission may be performed by using one or more subchannels.

In the time domain, slots that are part of a resource pool are (pre-)configured and occur periodically (e.g., every 10240 ms). In each slot of the resource pool, among $N^{slot}_{symb}$ symbols per slot, only a subset of consecutive symbols is (pre-)configured for direct communication between devices. Hereinafter, symbols (pre-)configured for direct communication between devices are referred to as SL symbols. A subset of SL symbols per slot is indicated by a starting symbol and the number of consecutive symbols, which are (pre-)configured per resource pool.

A 3GPP-based communication standard defines SL physical channels corresponding to REs that carry information originating from higher layers, and SL physical signals corresponding to REs that are used by a physical layer but do not carry information originating from higher layers. For example, a physical sidelink shared channel (PSSCH), a physical sidelink control channel (PSCCH), a physical sidelink broadcast channel (PSBCH), and a physical sidelink feedback channel (PSFCH) may be used as SL physical channels. In the present disclosure, the PSCCH carries sidelink control information (SCI) on SL. For example, the SCI is used to indicate resources used by the UE for the PSSCH and other transmission parameters, and PSCCH transmission is associated with a DMRS. The PSSCH may carry a data payload and additional control information on SL. Data may be organized into one or more transport blocks (TBs), and each TB may be associated with the SCI. For example, the PSSCH is used to carry one or more TBs, control information for hybrid automatic repeat request (HARQ) processes, and control information for triggering CSI feedback. In some scenarios, at least 6 OFDM symbols within a slot are used for PSSCH transmission, and the PSSCH is associated with the DMRS. The PSBCH carries information for supporting synchronization on SL, and in some scenarios, the PSBCH may be transmitted within a sidelink synchronization signal block (S-SSB). The PSFCH carries HARQ feedback on SL from a UE intended as a recipient of the PSSCH to a UE that performed the PSSCH transmission. Hereinafter, a UE that performs SL transmission is referred to as a TX UE, and an intended recipient UE(s) of SL transmission are referred to as RX UE(s).

In some scenarios, SCI may be transmitted in two stages. For example, in NR V2X, first-stage SCI may be carried on a PSCCH, and second-stage SCI may be carried on an associated PSSCH. Dividing the SCI into the first-stage SCI and the second-stage SCI allows UEs other than RX UE(s) of SL transmission to decode only the first-stage SCI for channel sensing, that is, for determining resources reserved by other transmissions. The second-stage SCI provides additional control information required for the RX UE(s) of SL transmission.

The number of symbols used for SL transmission within a slot may vary depending on physical channels carried within the slot.

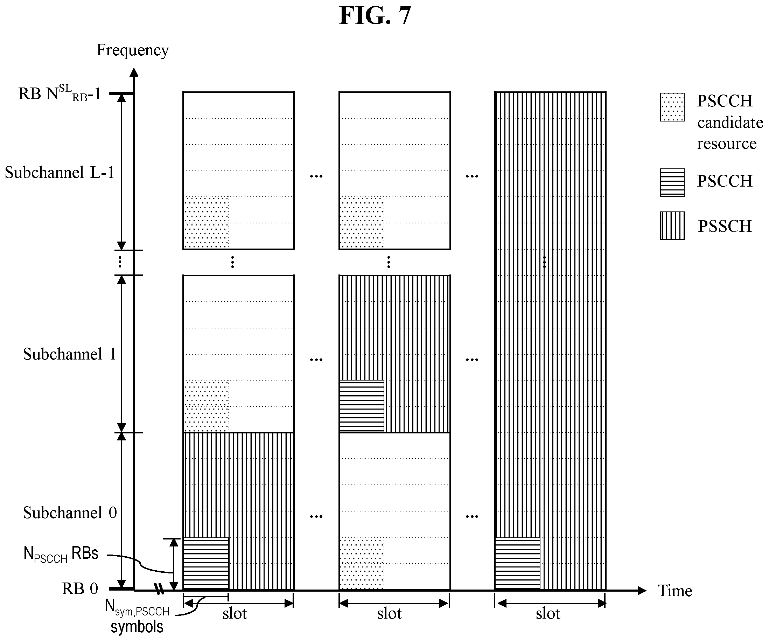

FIGS. 6 and 7 illustrate transmission structures of SL physical channels within a slot.

A PSCCH may be multiplexed with an associated PSSCH on non-overlapping resources within the same slot. Referring to FIG. 6, the PSCCH is transmitted in the frequency domain, starting from the lowest RB within subchannel(s) occupied by the associated PSSCH. The PSCCH is transmitted in the time domain, starting from the second symbol within the slot. The number of symbols for the PSCCH is (pre-)configured per resource pool, and may be, for example, two or three symbols. According to some scenarios (e.g., NR V2X), in the frequency domain, the PSCCH occupies $N_{PSCCH}$ RBs, and $N_{PSCCH}$ may be (pre-)configured per resource pool for UE(s) through higher-layer signaling (e.g., RRC signaling). In some scenarios (e.g., NR V2X), $N_{PSCCH}$ may be configured to be equal to 10, 12, 15, 20, or 25 RBs per resource pool. In some scenarios (e.g., NR V2X), $N_{PSCCH}$ is confined within one subchannel, and the number of RBs for the PSCCH, $N_{PSCCH}$, may be constrained by the number of RBs within the subchannel, $N_{sch}$ (i.e., $N_{PSCCH} \leq N_{sch}$). The PSCCH carries first-stage SCI including control information associated with the PSSCH and second-stage SCI. For this purpose, for example, SCI format 1-A may be used. The first-stage SCI may indicate frequency resources (e.g., subchannel(s)) of the PSSCH carrying a current (re-)transmission of a TB. The first-stage SCI may indicate resource reservation for retransmission(s) up to a predefined number (e.g., two) of retransmissions of the TB. The first-stage SCI may include a priority of the associated PSSCH and information related to a format and size of the second-stage SCI. The first-stage SCI may include information related to a modulation and coding scheme (MCS) of the TB carried on the associated PSSCH. Although not illustrated in FIG. 6, to demodulate the PSCCH, a DMRS associated with the PSCCH (hereinafter, a PSCCH DMRS) may be transmitted on the PSCCH. For example, each PSCCH symbol (i.e., an OFDM symbol including the PSCCH) may include the PSCCH DMRS. Although not illustrated in FIG. 6, a DMRS associated with the PSSCH may be carried on different symbols within a slot allocated for the PSSCH (hereinafter, a PSSCH slot). A plurality of time patterns for the PSSCH DMRS may be (pre-)configured within a resource pool, and the first-stage SCI may include information related to which time pattern is used for the associated PSSCH.

The PSSCH carries the second-stage SCI and a data payload composed of TB(s). The second-stage SCI may carry information used for decoding the PSSCH and information for supporting HARQ feedback and CSI reporting. The second-stage SCI may include a layer-1 source ID representing the identifier (ID) of the TX UE (within a physical layer) and layer-1 destination ID(s) representing ID(s) of intended recipient(s) (RX UE(s)) of the TB. The second-stage SCI may carry a one-bit new data indicator (NDI) used to specify whether a TB transmitted on the PSSCH corresponds to transmission of new data or retransmission. After decoding the first-stage SCI on the PSCCH, the RX UE has information required for decoding the second-stage SCI. The second-stage SCI may be decoded by using a PSSCH DMRS. Before being mapped to the PSSCH, the second-stage SCI and the TB are each channel-coded and multiplexed according to predefined procedures. Depending on the number of layers supported on the PSSCH (i.e., the number of data streams), the multiplexed second-stage SCI and TB are mapped to one or two layers and precoded before being mapped to $L_{PSSCH}$ subchannel(s) of the PSSCH. The PSSCH occupies $N_{PSSCH} = L_{PSSCH}*N_{sch}$ RBs, starting from the lowest RB within a subchannel carrying the corresponding PSCCH, where $N_{PSSCH}$ denotes the number of RBs occupied by the PSSCH, $L_{PSSCH}$ denotes the number of subchannels for the PSSCH, and $N_{sch}$ denotes the number of RBs per subchannel.

Referring to FIG. 6, the PSSCH may be transmitted from the second symbol within a slot to the second-to-last symbol or the last symbol within the slot, or may be transmitted from the second symbol within the slot to a symbol immediately preceding the last symbol of the slot. In some scenarios, 7 to 14 symbols within a slot may be (pre-)configured for SL, and the PSCCH may be transmitted over 5 to 12 consecutive symbols. The number of symbols occupied by the PSSCH depends on the number of SL symbols allocated within the slot and whether the PSFCH is transmitted in the slot. Within symbols carrying the PSCCH, the PSSCH may be multiplexed with the PSCCH in the frequency domain (if the PSCCH does not occupy all $L_{PSSCH}$ subchannel(s)). The second symbol within the slot (i.e., the first symbol carrying the PSCCH or the PSCCH/PSSCH) may be duplicated to the first symbol of the slot to be used for an automatic gain control (automatic gain control, AGC) purpose. In addition, a symbol following the last symbol carrying the PSSCH may be used as a guard symbol.

FIG. 6 illustrates a SL transmission structure in which the PSCCH occupies three symbols in the time domain and 14 symbols within a slot composed of 14 symbols are used for PSCCH and PSSCH transmission, However, the PSCCH may occupy two symbols, and among the symbols within the slot, some leading symbols may be used for PSCCH and PSSCH transmission, while remaining symbols may be used for a PSFCH or additional guard symbols.

Referring to FIG. 7, according to some scenarios (e.g., NR V2X), for a resource pool having L subchannels, L possible PSCCH locations exist within a slot, starting from the second SL symbol within the slot and from the lowest RB within each subchannel. In other words, for a resource pool having L subchannels, L PSCCH candidate resources may exist in each slot. Accordingly, in some scenarios, to receive the first-stage SCI, the UE needs to check (or monitor) the L possible PSCCH locations in each slot within the resource pool.

Referring to FIGS. 6 and 7, according to some scenarios (e.g., NR V2X), the UE is provided, through higher-layer signaling (e.g., RRC signaling), for a resource pool, with the number of symbols for the PSCCH, $N_{sym,PSCCH}$, and the number of RBs for the PSCCH, $N_{PSCCH}$. The PSCCH is transmitted on $N_{PSCCH}$ RBs, starting from the lowest RB of the lowest subchannel of the associated PSSCH within $N_{sym,PSCCH}$ symbols starting from the second symbol available for SL transmission within a slot.

The UE may be configured with one or more SL resource pools through higher-layer signaling (e.g., RRC signaling). An SL resource pool may be used for transmission of the PSSCH or for reception of the PSSCH. In some scenarios, the PSSCH is transmitted in the same slot as the associated PSCCH. In some scenarios, a minimum resource allocation unit for the PSSCH in the time domain is a slot. The PSSCH transmitted on consecutive symbols within a slot is not transmitted on symbols that are not configured for SL. The index of the first symbol among consecutive symbols that may be used for SL and the number of consecutive symbols that may be used for SL may be provided to UE(s) through higher-layer signaling (e.g., RRC signaling). The UE does not transmit the PSSCH on the last symbol configured for SL, and the last symbol may be used as a guard symbol. In some scenarios, a minimum resource allocation unit for the PSSCH in the frequency domain is a subchannel.

Referring to FIG. 7, when the PSCCH is transmitted or received on a PSCCH resource candidate of a slot within a resource pool, the PSSCH associated with the PSCCH is transmitted or received within consecutive symbols within the slot in the time domain. In the frequency domain, the PSSCH is transmitted or received on $L_{PSSCH}$ subchannels having a subchannel on which the PSCCH is transmitted or received as the lowest subchannel. When the PSSCH occupies a plurality of subchannels, PSCCH resource candidate(s) of remaining subchannel(s) other than the lowest subchannel among the plurality of subchannels are used for PSSCH transmission. PSCCH resource candidate(s) of subchannel(s) that are not used for PSSCH transmission in a slot within the resource pool are not used for PSCCH transmission. The RX UE attempts PSCCH detection on PSCCH resource candidates. When the RX UE detects the PSCCH in a slot, based on SCI carried by the PSCCH, the RX UE may regard the lowest RB on which the PSCCH is detected as the lowest RB of the PSSCH, and receive the PSSCH on $N_{PSSCH} = L_{PSSCH}*N_{sch}$ RBs starting from the lowest RB.

As the necessity of V2X, which is a communication technology supporting wired and wireless communication between a vehicle and another vehicle, infrastructure, a network, or a pedestrian, emerges, a rapid increase in SL communication is expected. For stable support of SL communication, it may be considered to support SL communication not only in a licensed spectrum in which a license is granted to a specific network operator and which may be used exclusively or preferentially by the network operator, but also in a shared spectrum, which is an unlicensed spectrum in which a license is not granted to a specific network operator and which may be freely used by multiple network operators. However, to support SL communication in the shared spectrum, a scheme for enabling coexistence between communication in the shared spectrum and SL communication is required. Hereinafter, among 3GPP-based communication technologies, technologies applied to UL communication and/or DL communication between the UE and the BS in the shared spectrum are described.

Unless otherwise stated, the following definitions may be applied to terms related to a shared spectrum in the present disclosure.

- Channel: a channel is composed of consecutive RBs in which a channel access procedure is performed in a shared spectrum, and may refer to a carrier or a part of a carrier.
- Channel access procedure (CAP): a CAP refers to a procedure for evaluating channel availability based on sensing to determine whether another communication device is using a channel before signal transmission. The BS or UE senses a channel during a sensing slot interval. If detected power during at least a predetermined time within the sensing slot interval is smaller than an energy detection threshold, the sensing slot interval is regarded as an idle or free state. Otherwise, the sensing slot interval is regarded as a busy state. The CAP may be referred to as listen-before-talk (LBT).
- Channel occupancy: channel occupancy refers to corresponding transmission(s) on channel(s) by the BS or UE after the CAP is performed.
- Channel occupancy time (COT): a COT refers to a total time during which, after performance of the CAP, transmission(s) may be performed on a channel by the BS or the UE and by any BS or UE(s) sharing channel occupancy. The COT may be shared for transmission between the BS and corresponding UE(s).

In some scenarios, when a carrier with an SCS configuration u in a shared spectrum is configured with *IntraCellGuardBandsPerSCS,* the UE is provided with $N_{RB-set}$ - 1 intra-cell guard bands on the carrier. Each intra-cell guard band is defined by a starting RB $GB^{start,u}_s$ and a size $G^{size,u}_s$ in terms of the number of RBs, where $GB^{start,u}_s$ and $GB^{size,u}_s$ are determined by higher-layer parameters provided from the BS to the UE, and $s \in \{0,1,..., N_{RB-set} - 2\}$. The intra-cell guard bands separate $N_{RB-set}$ RB sets, and each RB set is defined by a starting RB ($RB^{start,u}_s$) and an ending RB ($RB^{end,u}_s$). For $s \in \{0,1,..., N_{RB-set} - 1\}$, a starting RB index $RB^{start,u}_s$ and an ending RB index $RB^{end,u}_s$ of the UE may be determined by the following equations, respectively.

$$[\text{Equation 1}]$$
$$RB^{\text{start},\mu}_s = N^{\text{start},\mu}_{\text{grid}} + \begin{cases} 0 & s = 0 \\ GB^{\text{start},\mu}_{s-1} + GB^{\text{size},\mu}_{s-1} & \text{otherwise} \end{cases}$$

$$[\text{Equation 2}]$$
$$RB^{\text{end},\mu}_s = N^{\text{start},\mu}_{\text{grid}} + \begin{cases} N^{\text{size},\mu}_{\text{grid}} - 1 & s = N_{\text{RB-set}} - 1 \\ GB^{\text{start},\mu}_s - 1 & \text{otherwise} \end{cases}$$

An RB set with an index s is composed of $RB^{size,u}_s$ RBs, where $RB^{size,u}_s = RB^{end,u}_s - RB^{start,u}_s + 1$. When the UE is not configured with *IntraCellGuardBandsPerSCS* for u, the UE determines RB index(es) for intra-cell guard band(s) and corresponding RB set(s) according to a nominal intra-cell guard band and RB set pattern corresponding to u and a carrier size $N^{size,u}_{grid}$. When the nominal intra-cell guard band and RB set pattern does not include any intra-cell guard bands, the number of RB sets for the carrier is $N_{RB-set} = 1$.

When the UE is provided with the number of RBs equal to 0 for all intra-cell guard band(s) on a carrier with an SCS configuration u, the UE is indicated that no intra-cell guard bands are configured for the cell, and the UE expects $N_{RB-set} > 1$.

Since a shared spectrum is not dedicated to a specific network operator, the BS and the UE may apply LBT before performing transmission on a cell configured with shared spectrum channel access. When LBT is applied, a transmitter listens to or senses the channel in order to determine whether the channel is idle or busy, and performs transmission only when the channel is regarded as idle. In other words, for a shared spectrum, a communication device needs to determine whether a channel is used by other communication device(s) before signal transmission.

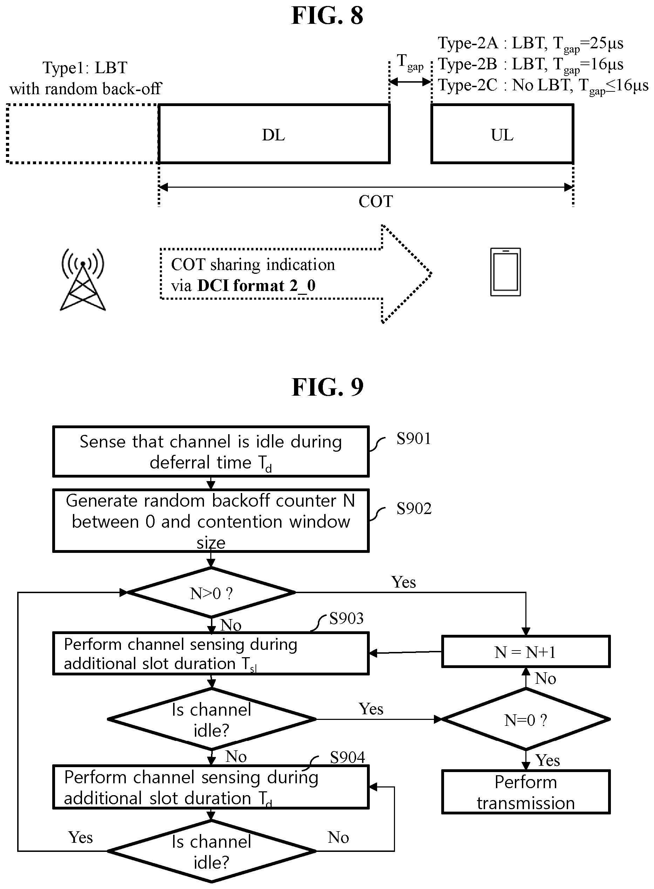

FIG. 8 is a diagram for explaining a channel access mechanism on a shared spectrum according to some implementations.

In a 3GPP-based system, channel access in DL and UL relies on LBT. The UE and the BS need to first sense a communication channel to determine whether there is no communication before transmission. When the communication channel is an unlicensed band having a wide bandwidth, a channel sensing procedure relies on detecting an energy level on a plurality of subbands of the communication channel. LBT parameters such as channel assessment parameters may be configured for the UE by the BS.

In some implementations, a channel access mechanism for a cell configured with shared spectrum channel access, that is, an LBT mechanism, may be broadly divided into a Type 1 CAP and a Type 2 CAP.

FIG. 9 illustrates a flow of a CAP. In particular, FIG. 9 illustrates a flow of a Type 1 CAP.

The Type 1 CAP is a counter-based random back-off channel access mechanism. When the UE or the BS indents to perform transmission, the UE or the BS performs LBT for sensing an idle channel on a cell of a shared spectrum. When the UE or the BS senses that the channel is idle for a deferral time $T_d$ (S901), the UE or the BS generates a random back-off counter N between 0 and a contention window size (S902). The contention window size is adjusted based on HARQ-ACK and a priority access class. When the counter is 0 and the UE or the BS is in a state of not performing transmission, the UE or the BS performs additional short LBT before the transmission during an additional slot duration $T_{sl}$ and an additional slot duration $T_d$ (S903 and S904). The duration of the additional short LBT is 43 $\mu$s, 52 $\mu$s, or 88 $\mu$s according to channel access priority class (CAPC) levels. For example, $T_d = T_f + m_p * T_{sl}$, where $m_p$ is determined based on a CAPC. For example, $T_f$ may be 16 $\mu$s, and $T_{sl}$ may be 9 $\mu$s. To increase the number of transmissions, shared spectrum channel access of NR introduces mini-slot-level channel access and supports back-to-back transmissions during a COT when a type gap between two consecutive transmissions is not longer than 16 $\mu$s.

NR shared spectrum channel access (hereinafter, NR-U) supports COT sharing. Different devices (e.g., UE or BS) may alternately use a medium or a channel under a condition that activity gaps between one transmission and another transmission are maintained. For example, when a UE or a BS initiates a COT through the Type 1 CAP, resources within the COT may be used for transmission by the UE or the BS and may also be shared for transmission by the BS or UE(s). NR-U supports Type 2 LBT for COT sharing. When resources within a COT initiated through the Type 1 CAP performed by a device are shared by another device, the other device may use Type-2A channel access, Type-2B channel access, or Type-2C channel access. For these channel access types, specific gap limitations between two adjacent transmissions are defined, and according to the specific gap limitations, a Type 2 channel transmission may be classified into Type-2A channel access, Type-2B channel access, and Type-2C channel access. In the case of Type-2A channel access, the UE or the BS performs channel sensing for a duration of 25 μs before starting transmission, and performs the transmission after the channel sensing is successful. In the case of Type-2B channel access, the UE or the BS performs channel sensing for a duration of 16 μs before starting transmission, and performs the transmission after the channel sensing is successful. In this case, a gap between a starting position of the transmission and an ending position of a previous transmission is 16 μs. In the case of Type-2C channel access, the UE may perform transmission immediately without channel sensing after the end of a gap. In this case, the gap between a starting position of the transmission and an ending position of a previous transmission may be less than or equal to 16 μs.

A gap for Type 2 LBT, that is, for Type 2 channel access, may be controlled by the BS through an LBT type indication (i.e., a channel access type indication) and a CAPC indication in DCI. For example, for a UL transmission burst of the UE occurring within a COT shared by the BS, when a starting time position of the UL transmission and an ending time position of a previous DL transmission burst are less than or equal to 16 μs, the BS may allow the UE to perform Type-2C channel access before the UL transmission burst.

To enable dynamic time division duplex (TDD) on a shared spectrum, the UE or the BS determines when or where transmission and/or reception is to be performed based on an indication of a COT structure. The COT includes a plurality of slots, and each slot may include DL resources, UL resources, or flexible resources. The COT structure reduces power consumption and channel access delay. In some scenarios (e.g., NR), the COT is typically about 8 ms, and a COT duration and RB sets available within the COT duration may be indicated by DCI format 2_0. Higher-layer parameters *availableRB-SetsToAddModList* and *co-DurationsPerCellToAddModList* may be configured by the BS. The following table shows a part of an information element (IE) *SlotFormatIndicator* including *availableRB-SetsToAddModList* and *co-DurationsPerCell-ToAddModList*. In some scenarios, the IE *SlotFormatIndicator* is used to configure monitoring of a group-common PDCCH for slot format indicators (SFIs).

[Table 3]

```
SlotFormatIndicator ::=        SEQUENCE {
    sfi-RNTI                        RNTI-Value,
    dci-PayloadSize                 INTEGER (1..maxSFI-DCI-PayloadSize),
    slotFormatCombToAddModList    SEQUENCE  (SIZE(1..maxNrofAggregatedCellsPerCellGroup))  OF
SlotFormatCombinationsPerCell        OPTIONAL, -- Need N
    slotFormatCombToReleaseList  SEQUENCE   (SIZE(1..maxNrofAggregatedCellsPerCellGroup))   OF
ServCellIndex                        OPTIONAL, -- Need N

    ...,
    [[
    availableRB-SetsToAddModList-r16  SEQUENCE  (SIZE(1..  maxNrofAggregatedCellsPerCellGroup))
OF AvailableRB-SetsPerCell-r16        OPTIONAL, -- Need N
    availableRB-SetsToReleaseList-r16  SEQUENCE  (SIZE(1..  maxNrofAggregatedCellsPerCellGroup))
OF ServCellIndex                      OPTIONAL   -- Need N
...
    co-DurationsPerCellToAddModList-r16 SEQUENCE (SIZE(1..maxNrofAggregatedCellsPerCellGroup))
OF CO-DurationsPerCell-r16            OPTIONAL, -- Need N
    co-DurationsPerCellToReleaseList-r16 SEQUENCE (SIZE(1..maxNrofAggregatedCellsPerCellGroup))
OF ServCellIndex                      OPTIONAL   -- Need N
    ]],
}


CO-DurationsPerCell-r16 ::=     SEQUENCE {
    servingCellId-r16               ServCellIndex,
    positionInDCI-r16               INTEGER(0..maxSFI-DCI-PayloadSize-1),
    subcarrierSpacing-r16           SubcarrierSpacing,
    co-DurationList-r16             SEQUENCE (SIZE(1..64)) OF CO-Duration-r16
}


CO-Duration-r16 ::=     INTEGER (0..1120)


AvailableRB-SetsPerCell-r16 ::=     SEQUENCE {
    servingCellId-r16               ServCellIndex,
    positionInDCI-r16               INTEGER(0..maxSFI-DCI-PayloadSize-1)
}
```

In the above table, *sfi-RNTI* is a parameter used to configure a radio network temporary identifier (RNTI) used for an SFI on a given cell, and *dci-PayloadSize* is a parameter used to configure a total length of a DCI payload scrambled by the SFI-RNTI. In addition, *slotFormatCombToAddModList* is a list of SlotFormatCombinations for serving cells of the UE. Each SlotFormatCombination is a parameter used to configure slot formats of consecutive slots in a time-domain order as listed in the corresponding SlotFormatCombination, and slotFormatCombToReleaseList is a list of SlotFormatCombinations to be released.

*availableRS-SetsToAddModList* is a list of *AvailableRB-SetsPerCell* object(s), and an *AvailableRB-SetsPerCell* object includes a parameter *servingCellId* indicating an ID of a cell to which a corresponding configuration is applicable, and a parameter *positionInDCI* related to a (starting) position of bits in a DCI payload indicating availability of RB sets of a serving cell. For the serving cell, the UE is provided, through the parameter *positionInDCI,* with a position of an available RB set indicator in DCI format 2_0. The position of the available RB set indicator in DCI format 2_0 is:

i) when it is indicated that no intra-cell guard bands are configured for the serving cell, the indicator is 1 bit. A value of '1' at the position indicates that the serving cell is available for reception, and a value of '0' at the position indicates that the serving cell is not available for reception. The serving cell remains available or unavailable for reception until an end of a remaining channel occupancy duration.

ii) when it is indicated that intra-cell guard band(s) are configured for the serving cell, the indicator is a bitmap of N RB-set bits having a one-to-one mapping with RB sets of the serving cell, where N RB-set is the number of RB sets within the serving cell. A value of '1' in the bitmap indicates that a corresponding RB set is available for reception, and a value of '0' in the bitmap indicates that the corresponding RB set is not available for reception. The RB set remains available or unavailable for reception until an end of a remaining channel occupancy duration.

*co-DurationsPerCellToAddModList* is a list of *CO-DurationsPerCell* object(s), and each *CO-DurationsPerCell* object includes a parameter *servingCellId* indicating an identifier of a cell to which a corresponding configuration is applicable, a parameter *positionInDCI* indicating a position in DCI of a bit field indicating a channel occupancy duration for serving cells of the UE, a parameter *subcarrierSpacing* indicating a reference SCS for a list of channel occupancy durations, and a *co-DurationList* indicating the list of channel occupancy durations in units of symbols.

In some implementations, referring to FIG. 8, RB sets available for COT sharing and a COT duration may be notified to UE(s) through DCI format 2_0 having a cyclic redundancy check (CRC) scrambled by the SFI-RNTI.

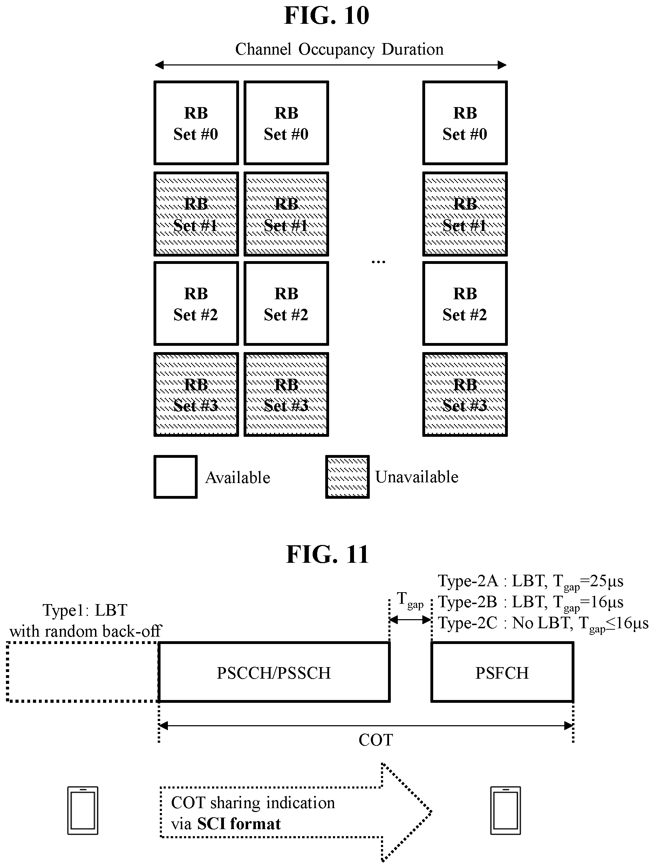

FIG. 10 illustrates COT sharing between a BS and a UE.

When the higher-layer parameter *availableRB-SetsToAddModListis* configured, the following information may be transmitted through DCI format 2_0: available RB set indicator 1, available RB set indicator 2, ..., available RB set indicator N1.

When the higher-layer parameter *co-DurationsPerCellToAddModList* is configured, the following information may be transmitted through the DCI format 2_0: COT duration indicator 1, COT duration indicator 2, ..., COT duration indicator N2.

For example, referring to FIG. 10, when a position of COT duration indicator 1 among bit fields in DCI format 2_0 is configured, by parameters *servingCellId* and *positionInDCI* in a *CoDurationsPerCell* object, as a bit field for a serving cell with serving cell index 1, and a reference SCS for the serving cell is configured, by *subcarrierSpacing,* as 15 kHz, if bit field COT duration indicator 1 in DCI format 2_0 transmitted by the BS to UE(s) includes a bit value indicating 280, UE(s) detecting the DCI format 2_0 may assume that, for the serving cell, a COT of 280 OFDM symbols based on an SCS of 15 kHz is initiated by the BS. When a position of available RB set indicator 1 among bit fields in the DCI format 2_0 is configured, by *AvailableRB-SetsPerCell,* to include a bitmap for a serving cell with serving cell index 1, the serving cell includes four RB sets, and available RB set indicator 1 includes a bitmap of '1010', RB sets on the serving cell may be shared by the BS and the UE during the COT duration, as illustrated in FIG. 10.

For stable support of SL communication, supporting SL communication in a shared spectrum may be considered as described above. An SL BWP and an SL resource pool discussed for SL of a 3GPP-based system, and RB sets discussed for shared spectrum transmission of the 3GPP-based system may be reused for SL transmission on the shared spectrum. Hereinafter, a shared spectrum supporting SL transmission is referred to as SL-U. Hereinafter, implementations of the present disclosure for coexistence of UL/DL transmission and SL transmission in the shared spectrum are described.

In some implementations of the present disclosure, one or more SL BWPs may be (pre-)configured within a carrier on a shared spectrum. In some implementations of the present disclosure, an SL BWP may be (pre-)configured to include one or more SL resource pools. In some implementations of the present disclosure, at least one resource pool may be (pre-)configured to include an integer number of RB sets. Here, an RB set may correspond to about 20 MHz. In some implementations of the present disclosure, when a resource pool includes two adjacent RB sets, RB(s) within an intra-cell guard band of the two adjacent RB sets may be specified as belonging to the resource pool. In some implementations of the present disclosure, interlaced RB-based transmission may be configured for PSCCH/PSSCH transmission for an SL BWP. When the UE is not configured to use interlaced RB-based PSCCH/PSSCH transmission for the SL BWP, or when contiguous-RB-based transmission is configured, the UE may perform PSCCH/PSSCH transmission using contiguous-RB-based transmission.

In SL-U, performance of LBT is required for SL transmission. A Type 1 SL CAP is applicable to PSCCH/PSSCH transmission(s) and other SL transmissions including S-SSB and PSFCH transmissions. Type-2A/2B/2C SL CAPs are applicable to the following cases:

> Type-2A is applicable when a gap is at least 25 μs.
> Type-2B is applicable when a gap is at least 16 μs.
> Type-2C is applicable for a gap that is less than or equal to 16 μs, and a transmission duration is at most 584 μs.

FIG. 11 illustrates COT sharing between a UE and another UE according to some implementations of the present disclosure.

For existing communication on a shared spectrum, COT sharing is initiated by the BS, and all UEs receiving a DCI format (e.g., DCI format 2_0) including COT sharing information transmitted by the BS may share the COT. In UE-to-UE sharing, a COT-initiating UE performs COT sharing based only on interference information around the COT-initiating UE. Thus, when the COT is shared with multiple unspecified UEs, an interference environment around each UE may be different from an interference environment around the COT-initiating UE. As a result, unexpected interference issues may occur. Accordingly, for UE-to-UE COT sharing, a method is required in which a channel occupancy state determined by the COT-initiating UE serving as a sensing entity shares the COT only with UE(s) with which the COT-initiating UE intends to communicate. Referring to FIG. 11, UE-to-UE COT sharing may be supported on SL. For S-SSB/PSFCH/PSSCH/PSCCH transmission(s), a responding UE may utilize the COT shared by the COT-initiating UE (using the Type 1 CAP) within RB set(s) corresponding to the shared COT. In the present disclosure, the COT-initiating UE is a UE performing the Type 1 CAP, and the responding UE is a UE receiving a PSCCH/PSSCH from the COT-initiating UE and sharing, with the COT-initiating UE, the COT initiated by the COT-initiating UE. SL transmission(s) from the responding UE within the shared COT may be performed when CAPC value(s) of the SL transmission(s) are less than or equal to a CAPC value indicated in an SCI format including a corresponding COT sharing indication.

In some implementations of the present disclosure, an SCI format may be used to transmit COT sharing information. For example, SCI format 2-A, SCI format 2-B, or SCI format 2-C may include the following SL transmission information:

> HARQ process number - 4 bits
> New data indicator - 1 bit
> Redundancy version - 2 bits
> Source ID - 8 bits
> Destination ID - 16 bits
> HARQ feedback enabled/disabled indicator - 1 bit
> Cast type indicator - 2 bits

The cast type indicator may include values according to the following table.

[Table 4]

| Value of Cast type indicator | Cast type |
|---|---|
| 00 | Broadcast |
| 01 | Groupcast<br>when HARQ-ACK information includes ACK or NACK |
| 10 | Unicast |
| 11 | Groupcast<br>when HARQ-ACK information includes only NACK |

In some implementations of the present disclosure, for example, a responding UE for a shared COT may be a receiving UE that is a target of PSCCH/PSSCH transmission of a COT-initiating UE in the following cases: i) in the case of unicast from the COT-initiating UE, within the same COT, when source and destination IDs included in SCI of the COT-initiating UE match corresponding destination and source IDs related to the same unicast at the receiving UE, and ii) in the case of groupcast and broadcast, when a destination ID included in SCI of the COT-initiating UE matches a destination ID known to the receiving UE. In some implementations of the present disclosure, a responding UE for a shared COT may be a UE identified by ID(s) when additional ID(s) are included in COT sharing information from a COT-initiating UE (in addition to source and destination IDs of PSCCH/PSSCH transmission).

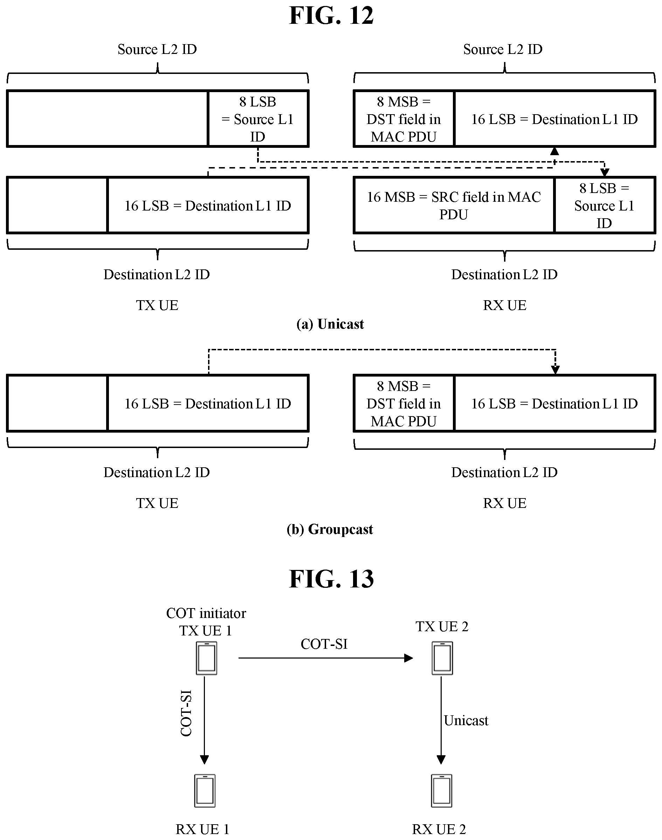

FIG. 12 illustrates a relationship between IDs of a transmitting UE and IDs of a receiving UE. In FIG. 12, L1 denotes Layer-1, and L2 denotes Layer-2.

Each UE is assigned one or more Layer-2 IDs composed of source Layer-2 ID(s) and destination Layer-2 ID(s), and the Layer-2 ID is determined according to a V2X communication mode.

A TB carried by a PSSCH corresponds to a MAC PDU at a MAC layer, and the MAC PDU may include a MAC SDU including SL-SCH data and a MAC subheader for the MAC SDU. The MAC subheader includes a source (SRC) field and a destination (DST) field, and carries 16 most significant bits (MSBs) of a source Layer-2 ID set with an identifier provided by a higher layer above the MAC layer in a protocol stack. The DST field carries 8 MSBs of a destination Layer-2 ID set with the identifier provided by the higher layer above the MAC layer.

When a TX UE performs transmission, an (8-bit) source Layer-1 ID is determined as 8 least significant bits (LSBs) of a source Layer-2 ID, and a (16-bit) destination Layer-1 ID is determined as 16 LSBs of a destination Layer-2 ID. For example, in SL transmission information of a TB for a source and destination pair of a MAC PDU to be transmitted, the TX UE sets a source Layer-1 ID (e.g., source ID of SCI format 2-A) to 8 LSBs of a source Layer-2 ID of the MAC PDU, and sets a destination Layer-1 ID (e.g., destination ID of SCI format 2-A) to 16 LSBs of a destination Layer-2 ID of the MAC PDU.

When an RX UE performs reception, the RX UE obtains a source Layer-1 ID and a destination Layer-1 ID from a second-stage SCI format (e.g., SCI format 2-A).

Referring to FIG. 12(a), in the case of unicast, the RX UE checks whether 16 LSBs of source Layer-2 ID(s) held by the RX UE are identical to a destination Layer-1 ID obtained by the RX UE, and checks whether 8 LSBs of destination Layer-2 ID(s) held by the RX UE are identical to a source Layer-1 ID obtained by the RX UE. When 16 LSBs of a source Layer-2 ID held by the RX UE are identical to the obtained destination Layer-1 ID and 8 LSBs of a destination Layer-2 ID held by the RX UE are identical to the obtained source Layer-1 ID, the RX UE may perform decoding for a received PSSCH to obtain a TB. For example, when the TB is associated with unicast, and a DST field of a MAC PDU subheader decoded by the UE is identical to 8 MSBs of any one of source Layer-2 ID(s) of the UE and 16 LSBs are identical to a destination ID in the corresponding SCI, and an SRC field of the decoded MAC PDU subheader is identical to 16 MSBs of any one of destination Layer-2 ID(s) of the UE and 8 LSBs are identical to a source ID in the corresponding SCI, the UE may determine that the UE is the target UE of the TB.

Referring to FIG. 12(b), in the case of groupcast, the RX UE checks whether 16 LSBs of destination Layer-2 ID(s) held by the RX UE are identical to a destination Layer-1 ID obtained by the RX UE. When identical, the RX UE may decode a received PSSCH to obtain a TB. For example, when the TB is associated with groupcast, and a DST field of a MAC PDU subheader decoded by the UE is identical to 8 MSBs of any one of destination Layer-2 ID(s) of the UE and 16 LSBs are identical to a destination ID in the corresponding SCI, the UE may determine that the UE is one of target UEs of the TB.

In some implementations of the present disclosure, to allow more SL UEs to access a channel and utilize resources within a COT duration, more source IDs and/or destination IDs may be included in COT sharing information (COT-SI). This may improve resource utilization efficiency by allowing fewer UEs to perform the Type 1 CAP, thereby reducing system load or congestion. In this case, which ID is to be indicated and how the ID is to be indicated become issues. Hereinafter, implementations of the present disclosure for providing additional ID(s) for COT sharing are described. In the following description, the following is assumed.

> It is assumed that COT-SI includes a CAPC used to initiate a COT, source and destination Layer-1 IDs, time-domain information of the shared COT (e.g., COT duration), and frequency-domain information of the shared COT (e.g., available RB set(s)).
> The COT-SI may be included in a first-stage SCI format and/or a second-stage SCI format.
> A responding UE sharing the COT may be i) in the case of unicast, a receiving UE in which source/destination IDs indicated by a second-stage SCI format match destination/UE IDs at the receiving UE, and/or ii) in the case of groupcast, a receiving UE in which a destination ID indicated by the second-stage SCI format matches a destination ID at the receiving UE.

In some implementations of the present disclosure, a cell in which COT-SI is transmitted and a cell for which a COT duration and available frequency resource(s) (e.g., available RB set(s)) are indicated by the COT-SI may be the same or may be different.

The following may be considered as SCI format(s) for transmission of ID(s). Hereinafter, an original ID refers to a source ID and a destination ID transmitted in a second-stage SCI format, that is, SCI format 2-A, SCI format 2-B, or SCI format 2-C.

* Alt 1-1. The first-stage SCI format, which is SCI transmitted through the PSCCH, may be used for an additional ID, and the second-stage SCI format, which is SCI transmitted through the PSSCH, may be used for an original ID. In other words, the additional ID may be included in the first-stage SCI format and transmitted through the PSCCH. According to Alt 1-1, since the additional ID is included in the first-stage SCI format, blind decoding for the second-stage SCI format may be potentially skipped or omitted.

* Alt 1-2. The second-stage SCI format may be used for both an additional ID and an original ID. In other words, the additional ID may be included in the second-stage SCI format and transmitted through the PSSCH. According to Alt 1-2, even when signaling of the additional ID is introduced, the first-stage SCI format may not be changed.

* Alt 1-3. The first-stage SCI format may be used for both an additional ID and an original ID. According to Alt 1-3, since both the additional ID and the original ID are included in the first-stage SCI format and transmitted through the PSCCH, COT responding UE(s) and UE(s) receiving the PSSCH associated with the PSCCH may quickly determine whether to use the second-stage SCI format included in the PSSCH.

In this case, which ID is additionally indicated becomes an issue. The following may be considered.

* Alt 2-1. A destination Layer-1 ID is additionally indicated for both unicast and groupcast. For example, a 16-bit destination Layer-1 ID may be included in an SCI format carrying COT-SI. In this case, responding UE(s) for COT sharing may be determined as follows.

** Alt 2-1-1

In the case of unicast, the responding UE may be a receiving UE when an (original) source ID and an (additional) destination ID indicated by the second-stage SCI format match a destination ID and a source ID at the receiving UE. In this case, COT sharing is allowed only for unicast transmission with the COT-initiating UE. In the case of groupcast, the responding UE may be a receiving UE when an (additional) destination ID matches a destination ID at the receiving UE.

** Alt 2-1-2

In the case of unicast, the responding UE may be a receiving UE when an (additional) destination ID matches a source ID at the receiving UE. In this case, it may become possible for UE(s) other than the COT-initiating UE to perform unicast transmission to the COT-initiating UE or to another UE within a COT by the COT-initiating UE. In the case of groupcast, the responding UE may be a receiving UE when an (additional) destination ID matches a destination ID at the receiving UE.

FIG. 13 illustrates utilization of an additional ID according to some implementations of the present disclosure. Referring to FIG. 13, a COT-initiating UE performs the Type 1 CAP. When the Type 1 CAP is successful, the COT-initiating UE may transmit COT-SI including an original source ID, an original destination ID, and an additional destination ID within a COT. In the example of FIG. 13, TX UE 1, which is a COT initiator, may transmit COT-SI by setting the original source ID to be identical to 8 LSBs of a source Layer-2 ID of TX UE 1, setting the original destination ID to be identical to 16 LSBs of a source Layer-2 ID of RX UE 1, and setting the additional destination ID to be identical to 16 LSBs of a source Layer-2 ID of TX UE 2. When 16 LSBs of any one of source Layer-2 ID(s) of RX UE 1 are identical to the original destination ID and 8 LSBs of any one of destination Layer-2 ID(s) of RX UE 1 are identical to the original source ID, RX UE 1 may determine that RX UE 1 is a target RX UE of a TB carried by a PSSCH associated with a PSCCH including the COT-SI or by a PSSCH including the COT-SI. When 16 LSBs of any one of source Layer-2 ID(s) of TX UE 2 are identical to the additional destination ID, TX UE 2 may determine that transmission may be performed within a COT initiated by TX UE 1. For example, based on the COT-SI, TX UE 2 may perform unicast transmission to RX UE 2 using Type 2 channel access on available RB set(s) within the COT duration.

* Alt 2-2. In the case of unicast, a source ID is additionally indicated, and in the case of groupcast, a destination ID is additionally indicated. In this case, responding UE(s) for COT sharing may be determined as follows.

In the case of unicast, the responding UE may be a receiving UE when an (additional) source ID and an (original) destination ID indicated by the second-stage SCI format match a destination ID and a source ID at the receiving UE. In this case, COT sharing is allowed for multiple unspecified UEs that intend to communicate with the COT-initiating UE. In the case of groupcast, the responding UE may be a receiving UE when an (additional) destination ID matches a destination ID at the receiving UE.

According to Alt 2-2, since 8 bits are required for a source ID and 16 bits are required for a destination ID, the size of an SCI format may vary depending on the cast type. In consideration of this, the following alternatives may be considered.

** Alt 2-2-1. The field size of additional ID(s) is fixed to 16 bits. In the case of unicast, 8 LSBs (or 8 MSBs) of an additional ID field are used for a source ID.

** Alt 2-2-2. The field size of additional ID(s) varies depending on the cast type. The field size is 8 bits for unicast and 16 bits otherwise. According to Alt 2-2-2, since the field size of the additional ID(s) depends on the cast type, the UE is required to perform additional blind decoding.

* Alt 2-3. Both a source ID and a destination ID are indicated. For example, 24-bit additional ID(s) may be included in an SCI format carrying COT-SI. In this case, responding UE(s) for COT sharing may be determined as follows.

In the case of unicast, the responding UE may be a receiving UE when (additional) source and destination IDs indicated by the first-stage SCI format or the second-stage SCI format match destination and source IDs at the receiving UE.

In the case of groupcast, the responding UE may be a receiving UE when an (additional) destination ID matches a destination ID at the receiving UE.

* Alt 2-4. An additional ID is applicable only to unicast. The same methods as in Alt 2-1, Alt 2-2, and/or Alt 2-3 may be considered for determining responding UE(s).

The COT-initiating UE may not desire to transmit additional ID(s). In this case, the COT-initiating UE may process ID field(s) defined for signaling of additional ID(s) according to some implementations of the present disclosure as follows.

* Alt 3-1. Additional ID(s) are set to be identical to values of original ID(s). For example, an additional source ID (or destination ID) is set to be identical to a value of an original source ID (or destination ID) in the second-stage SCI format. In some implementations, when additional ID(s) are included in the first-stage SCI format, if the additional ID(s) do not match ID(s) of the responding UE, the responding UE may skip blind decoding for the second-stage SCI format.

* Alt 3-2. Additional ID(s) are set to a value of zero.

* Alt 3-3. Additional ID field(s) are not included in an SCI format. In this case, the size of the SCI format may vary depending on whether additional ID(s) are included. Accordingly, according to Alt 3-3, the UE is required to perform additional blind decoding for different SCI format sizes.

The COT-initiating UE may perform Type 1 LBT (i.e., Type 1 channel access) on behalf of other UEs and transmit COT-SI including an additional ID according to the above-described implementations of the present disclosure. A UE receiving the COT-SI may determine whether transmission may be performed using resources within the COT based on the additional ID and IDs held by the UE.

In some implementations of the present disclosure, UE(s) other than a target RX UE to which a TX UE transmits a physical control channel and/or a physical shared channel may perform SL transmission on a COT initiated by the TX UE based on COT-SI. In other words, by allowing a COT-initiating UE to transmit an additional ID in addition to an existing source ID and destination ID, the COT-initiating UE may provide COT sharing opportunities to more UEs.

In the case of conventional communication on a shared spectrum, all UEs that receive a DCI format (e.g., DCI format 2_0) including COT-SI transmitted by the BS may share a COT. However, according to some implementations of the present disclosure, a COT may be shared between a COT-initiating UE and one or more UEs intended by the COT-initiating UE based on a source ID and a destination ID.

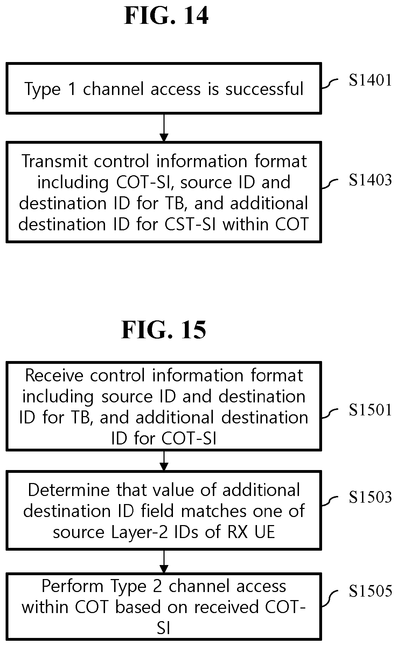

FIG. 14 illustrates an exemplary procedure in which a communication device performs wireless transmission according to some implementations of the present disclosure.

A TX UE may perform operations according to some implementations of the present disclosure in relation to wireless transmission. The TX UE may include at least one transceiver; at least one processor; and at least one computer memory operably connectable to the at least one processor and storing instructions that, when executed, cause the at least one processor to perform the operations according to some implementations of the present disclosure. A processing device for the TX UE may include at least one processor; and at least one computer memory operably connectable to the at least one processor and storing instructions that, when executed, cause the at least one processor to perform the operations according to some implementations of the present disclosure. A computer-readable (non-transitory) storage medium may store at least one computer program including instructions that, when executed by at least one processor, cause the at least one processor to perform the operations according to some implementations of the present disclosure. A computer program or a computer program product may be recorded on at least one computer-readable (non-transitory) storage medium and may include instructions that, when executed, (cause at least one processor to) perform the operations according to some implementations of the present disclosure.

In the TX UE, the processing device, the computer-readable (non-transitory) storage medium, and/or the computer program product, the operations include: performing Type 1 channel access on a cell for transmission of a TB; and based on success of the Type 1 channel access for the cell (S1401), transmitting a first control information format and the TB within a COT determined by the Type 1 channel access, wherein the first control information format includes COT-SI including time-domain information and frequency-domain information related to the COT for the cell (S1403). The first control information format may include: i) a source ID field and a destination ID field for the TB; and ii) at least one additional destination ID field for the COT-SI.

In some implementations, the source ID field may include 8 LSBs of a source Layer-2 ID of the TB, the destination ID field may include 16 LSBs of a destination Layer-2 ID of the TB, and the additional destination ID field may include 16 LSBs of a destination Layer-2 ID different from the destination Layer-2 ID.

In some implementations, the TB and the first control information format may be transmitted through a physical shared channel (i.e., a physical data channel).

In some implementations, the operations may include transmitting a physical control channel carrying a second control information format for scheduling the physical shared channel and the first control information format within the COT.

In some implementations, the time-domain information may include information related to a channel occupancy duration. The information related to the channel occupancy duration may include information related to a remaining COT duration. In some implementations, the information related to the channel occupancy duration may be information related to an absolute time length. In some implementations, the information related to the channel occupancy duration may be information related to the number of slots. In some implementations, the information related to the channel occupancy duration may be information related to a payload size.

In some implementations, the frequency-domain information may be information related to available RB set(s). In some implementations, the frequency-domain information may be a frequency resource indicator value indicating available frequency resource(s).

FIG. 15 illustrates an exemplary procedure in which a communication device performs wireless reception according to some implementations of the present disclosure.

An RX UE may perform operations according to some implementations of the present disclosure in relation to SL reception. The RX UE may include at least one transceiver, at least one processor, and at least one computer memory operably connectable to the at least one processor and storing instructions that, when executed, cause the at least one processor to perform the operations according to some implementations of the present disclosure. A processing device for the RX UE may include at least one processor and at least one computer memory operably connectable to the at least one processor and storing instructions that, when executed, cause the at least one processor to perform the operations according to some implementations of the present disclosure. A computer-readable (non-transitory) storage medium may store at least one computer program including instructions that, when executed by at least one processor, cause the at least one processor to perform operations according to some implementations of the present disclosure. A computer program or a computer program product may be recorded on at least one computer-readable (non-transitory) storage medium and may include instructions that, when executed, (cause at least one processor to) perform the operations according to some implementations of the present disclosure.

In the RX UE, the processing device, the computer-readable (non-transitory) storage medium, and/or the computer program product, the operations may include: receiving a first control information format including COT-SI including time-domain information and frequency-domain information related to a COT for a cell (S1501), wherein the first control information format includes: i) a source ID field and a destination ID field for a TB; and ii) at least one additional destination ID field for the COT-SI; based on a value of the additional destination ID field matching any one of source Layer-2 IDs of the communication device (S1503), performing Type 2 channel access within the COT indicated by the COT-SI (S1505); and based on success of the Type 2 channel access, performing wireless transmission on at least one available resource within the COT.

In some implementations, the first control information format may be received through a physical shared channel (i.e., a physical data channel) carrying the TB.

In some implementations, the source ID field may include 8 LSBs of a source Layer-2 ID of the TB, the destination ID field may include 16 LSBs of a destination Layer-2 ID of the TB, and the additional destination ID field may include 16 LSBs of a destination Layer-2 ID different from the destination Layer-2 ID.

In some implementations, the operations may further include receiving a physical control channel carrying a second control information format for scheduling the physical shared channel and the first control information format within the COT.

As described above, the examples described in the present disclosure have been provided to enable a person with ordinary skill in the technical field related to the present disclosure to implement and practice the present disclosure. Although the present disclosure has been described above with reference to the examples of the present disclosure, a person with ordinary skill in the technical field may variously modify and change the examples of the present disclosure. Accordingly, the present disclosure is not intended to be limited to the examples described herein, but is intended to be accorded the broadest scope consistent with the principles and novel features disclosed herein.

Implementations of the present disclosure may be used in a wireless communication system, in a BS, a UE, or other equipment.

**Claims**

1.　A method of transmitting a wireless channel by a communication device in a wireless communication system, the method comprising:

> performing a Type 1 channel access on a cell for transmission of a transport block; and
> based on success of the Type 1 channel access for the cell, transmitting a first control information format and the transport block within a channel occupancy time (COT) determined by the Type 1 channel access, wherein the first control information format includes COT sharing information including time-domain information and frequency-domain information related to the COT for the cell,
> wherein the first control information format includes:
>
> > i) a source identifier (ID) field and a destination ID field for the transport block; and
> > ii) at least one additional destination ID field for the COT sharing information.

2.　The method of claim 1, wherein the source ID field includes 8 least significant bits (LSBs) of a source Layer-2 ID of the transport block,

> wherein the destination ID field includes 16 LSBs of a destination Layer-2 ID of the transport block, and
> wherein the additional destination ID field includes 16 LSBs of a destination Layer-2 ID different from the destination Layer-2 ID.

wherein the additional destination ID field includes 16 LSBs of a destination Layer-2 ID different from the destination Layer-2 ID of the transport block.

3. The method of claim 1, wherein the transport block and the first control information format are transmitted through a physical shared channel.

4. The method of claim 3, further comprising transmitting a physical control channel carrying a second control information format for scheduling the physical shared channel and the first control information format within the COT.

5. A communication device configured to transmit a wireless channel in a wireless communication system, the communication device comprising:

at least one transceiver;
at least one processor; and
at least one memory operably connected to the at least one processor and storing instructions that, when executed, cause the at least one processor to perform operations comprising:

performing a Type 1 channel access on a cell for transmission of a transport block; and
based on success of the Type 1 channel access for the cell, transmitting a first control information format and the transport block within a channel occupancy time (COT) determined by the Type 1 channel access, wherein the first control information format includes COT sharing information including time-domain information and frequency-domain information related to the COT for the cell,
wherein the first control information format includes:

i) a source identifier (ID) field and a destination ID field for the transport block; and
ii) at least one additional destination ID field for the COT sharing information.

6. A computer-readable non-transitory storage medium comprising at least one computer program that causes at least one processor to perform operations comprising:

performing a Type 1 channel access on a cell for transmission of a transport block; and
based on success of the Type 1 channel access for the cell, transmitting a first control information format and the transport block within a channel occupancy time (COT) determined by the Type 1 channel access, wherein the first control information format includes COT sharing information including time-domain information and frequency-domain information related to the COT for the cell,
wherein the first control information format includes:

i) a source identifier (identifier, ID) field and a destination ID field for the transport block; and
ii) at least one additional destination ID field for the COT sharing information.

7. A method of receiving a wireless channel by a communication device in a wireless communication system, the method comprising:

receiving a first control information format including channel occupancy time (COT) sharing information including time-domain information and frequency-domain information related to a COT for a cell,
wherein the first control information format includes:

i) a source identifier (ID) field and a destination ID field for a transport block; and
ii) at least one additional destination ID field for the COT sharing information;

based on a value of the additional destination ID field matching any one of source Layer-2 IDs of the communication device, performing a Type 2 channel access within the COT indicated by the COT sharing information; and
based on success of the Type 2 channel access, performing wireless transmission on at least one available resource within the COT.

8. The method of claim 7, wherein the first control information format is received through a physical shared channel carrying the transport block.

9. The method of claim 8, wherein the source ID field includes 8 least significant bits (LSBs) of a source Layer-2 ID of the transport block,

wherein the destination ID field includes 16 LSBs of a destination Layer-2 ID of the transport block, and
wherein the additional destination ID field includes 16 LSBs of a destination Layer-2 ID different from the destination Layer-2 ID.
wherein the additional destination ID field includes 16 LSBs of a destination Layer-2 ID different from the destination Layer-2 ID of the transport block.

10. The method of claim 8, further comprising receiving a physical control channel carrying a second control information format for scheduling the physical shared channel and the first control information format within the COT.

11. A communication device configured to receive a wireless channel in a wireless communication system, the communication device comprising:

at least one transceiver;
at least one processor; and
at least one memory operably connected to the at least one processor and storing instructions that, when executed, cause the at least one processor to perform operations comprising:

receiving a first control information format including channel occupancy time (COT) sharing information including time-domain information and frequency-domain information related to a COT for a cell,
wherein the first control information format includes:

i) a source identifier (ID) field and a destination ID field for a transport block; and
ii) at least one additional destination ID field for the COT sharing information;

based on a value of the additional destination ID field matching any one of source Layer-2 IDs of the communication device, performing a Type 2 channel access within the COT indicated by the COT sharing information; and
based on success of the Type 2 channel access, performing wireless transmission on at least one available resource within the COT.

12. A computer-readable non-transitory storage medium comprising at least one computer program that causes at least one processor to perform operations comprising:

receiving a first control information format including channel occupancy time (COT) sharing information including time-domain information and frequency-domain information related to a COT for a cell,
wherein the first control information format includes:

i) a source identifier (ID) field and a destination ID field for a transport block; and
ii) at least one additional destination ID field for the COT sharing information;

based on a value of the additional destination ID field matching any one of source Layer-2 IDs of the communication device, performing a Type 2 channel access within the COT indicated by the COT sharing information; and
based on success of the Type 2 channel access, performing wireless transmission on at least one available resource within the COT.

# FIG. 1

100    First wireless device    108 ⌐    ⌐ 208    Second wireless device    200

| Processor(s) | Transceiver(s) |

102

| Memory(s) |

104    106

| Transceiver(s) | Processor(s) |

202

| Memory(s) |

206    204

# FIG. 2

| 1 Frame (10 ms) |

... ... ...

| SF 0 (1 ms) | ... | SF 4 (1 ms) | SF 5 (1 ms) | ... | SF 9 (1 ms) |

$\Delta f =$
$2^{u} \cdot 15 \ [kHz]$

| Slot 0 | ... | Slot $N^{subframe,u}_{slot} - 1$ |

$1000/N^{subframe,u}_{slot}$
$[\mu s]$

| Symbol 0 | Symbol 1 | ... | Symbol $N^{slot}_{symb} - 1$ |

# FIG. 3

Resource Grid

**FIG. 4**

# FIG. 5

# FIG. 6

# FIG. 7

EP 4 757 475 A1

# FIG. 8

Type1: LBT
with random back-off

Type-2A : LBT, $T_{gap}=25\mu s$
Type-2B : LBT, $T_{gap}=16\mu s$
Type-2C : No LBT, $T_{gap}\leq16\mu s$

$T_{gap}$

| DL | UL |
|---|---|

COT

COT sharing indication
via **DCI format 2_0**

# FIG. 9

Sense that channel is idle during deferral time $T_d$ — S901

Generate random backoff counter N between 0 and contention window size — S902

N>0 ?

Yes → N = N+1

No → S903 Perform channel sensing during additional slot duration $T_{sl}$

Is channel idle?

Yes → N=0 ?

No → N = N+1

N=0 ? No → N = N+1

N=0 ? Yes → Perform transmission

No → S904 Perform channel sensing during additional slot duration $T_d$

Is channel idle?

Yes → (to N>0?)
No → Perform transmission

# FIG. 10

Channel Occupancy Duration

|  |  |  |  |
|---|---|---|---|
| **RB Set #0** | **RB Set #0** | ... | **RB Set #0** |
| RB Set #1 | RB Set #1 | | RB Set #1 |
| **RB Set #2** | **RB Set #2** | | **RB Set #2** |
| RB Set #3 | RB Set #3 | | RB Set #3 |

☐ Available    ▨ Unavailable

# FIG. 11

Type-2A : LBT, $T_{gap}$=25μs

$T_{gap}$ Type-2B : LBT, $T_{gap}$=16μs

Type-2C : No LBT, $T_{gap}$≤16μs

Type1: LBT with random back-off

PSCCH/PSSCH     PSFCH

COT

COT sharing indication via **SCI format**

EP 4 757 475 A1

## FIG. 12

Source L2 ID

| | 8 LSB = Source L1 ID |
|---|---|

| 8 MSB = DST field in MAC PDU | 16 LSB = Destination L1 ID |
|---|---|

Source L2 ID

| | 16 LSB = Destination L1 ID |
|---|---|

| 16 MSB = SRC field in MAC PDU | 8 LSB = Source L1 ID |
|---|---|

Destination L2 ID

TX UE

Destination L2 ID

RX UE

**(a) Unicast**

| | 16 LSB = Destination L1 ID |
|---|---|

| 8 MSB = DST field in MAC PDU | 16 LSB = Destination L1 ID |
|---|---|

Destination L2 ID

TX UE

Destination L2 ID

RX UE

**(b) Groupcast**

## FIG. 13

COT initiator
TX UE 1

COT-SI →

TX UE 2

COT-SI ↓

Unicast ↓

RX UE 1

RX UE 2

# FIG. 14

Type 1 channel access is successful — S1401

↓

Transmit control information format including COT-SI, source ID and destination ID for TB, and additional destination ID for CST-SI within COT — S1403

# FIG. 15

Receive control information format including source ID and destination ID for TB, and additional destination ID for COT-SI — S1501

↓

Determine that value of additional destination ID field matches one of source Layer-2 IDs of RX UE — S1503

↓

Perform Type 2 channel access within COT based on received COT-SI — S1505

## INTERNATIONAL SEARCH REPORT

International application No.

**PCT/KR2024/010631**

### A. CLASSIFICATION OF SUBJECT MATTER

**H04W 72/25**(2023.01)i; **H04W 72/0446**(2023.01)i; **H04W 72/0453**(2023.01)i; **H04W 74/0808**(2024.01)i; **H04W 92/18**(2009.01)i

According to International Patent Classification (IPC) or to both national classification and IPC

### B. FIELDS SEARCHED

Minimum documentation searched (classification system followed by classification symbols)

H04W 72/25(2023.01); H04L 1/18(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: COT(channel occupancy time), COT 공유 정보(sharing information), 타입 1-2 채널 접속(type 1-2 channel access), 소스 ID 필드(source identifier field), 목적지 ID 필드(destination identifier field), 추가 목적지 ID 필드(additional destination identifier field)

### C. DOCUMENTS CONSIDERED TO BE RELEVANT

| Category* | Citation of document, with indication, where appropriate, of the relevant passages | Relevant to claim No. |
|---|---|---|
| X<br>Y | MODERATOR (OPPO). FL summary for AI 9.4.1.1: SL-U channel access mechanism (EOM). R1-2306029. 3GPP TSG RAN WG1 #113. Incheon, Korea. 30 May 2023.<br>See sections 3.1 - 6.6. | 1,3,5,6<br>2,4,7-12 |
| Y | OPPO. On channel access mechanism and resource allocation for SL-U. R1-2302549, 3GPP TSG RAN WG1 #112bis-e, e-Meeting. 07 April 2023.<br>See section 2.3. | 2,9 |
| Y | KR 10-2023-0047139 A (BEIJING UNISOC COMMUNICATIONS TECHNOLOGY CO., LTD.) 06 April 2023 (2023-04-06)<br>See paragraphs [0022]-[0088]. | 4,10 |
| Y | LG ELECTRONICS. Discussion on channel access mechanism for sidelink on unlicensed spectrum. R1-2211263, 3GPP TSG RAN WG1 #111. Toulouse, France. 07 November 2022.<br>See section 2.1.2.2. | 7-12 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2024** | **14 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/010631**

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0049040 A (SAMSUNG ELECTRONICS CO., LTD.) 12 April 2023 (2023-04-12) See paragraphs [0033]-[0037]; and figure 3. | 1-12 |

Form PCT/ISA/210 (second sheet) (July 2022)

**INTERNATIONAL SEARCH REPORT**
**Information on patent family members**

International application No.

**PCT/KR2024/010631**

| Patent document cited in search report | | | Publication date (day/month/year) | Patent family member(s) | | | Publication date (day/month/year) |
|---|---|---|---|---|---|---|---|
| KR | 10-2023-0047139 | A | 06 April 2023 | CN | 114071396 | A | 18 February 2022 |
| | | | | EP | 4192049 | A1 | 07 June 2023 |
| | | | | JP | 2023-534996 | A | 15 August 2023 |
| | | | | JP | 7520210 | B2 | 22 July 2024 |
| | | | | US | 2023-0156669 | A1 | 18 May 2023 |
| | | | | WO | 2022-022237 | A1 | 03 February 2022 |
| KR | 10-2023-0049040 | A | 12 April 2023 | CN | 115955727 | A | 11 April 2023 |
| | | | | EP | 4164324 | A1 | 12 April 2023 |
| | | | | TW | 202316881 | A | 16 April 2023 |
| | | | | US | 2023-0106442 | A1 | 06 April 2023 |

Form PCT/ISA/210 (patent family annex) (July 2022)